(19) **Europäisches Patentamt**
**European Patent Office**
**Office européen des brevets**

(11) **EP 4 553 862 A1**

(12) **EUROPEAN PATENT APPLICATION**
published in accordance with Art. 153(4) EPC

(43) Date of publication:
**14.05.2025 Bulletin 2025/20**

(21) Application number: **23835610.9**

(22) Date of filing: **07.07.2023**

(51) International Patent Classification (IPC):
*H01B 13/00* (2006.01)        *C01B 25/14* (2006.01)
*H01M 10/0562* (2010.01)

(52) Cooperative Patent Classification (CPC):
**C01B 25/14; H01B 13/00; H01M 10/0562;**
**Y02E 60/10**

(86) International application number:
**PCT/JP2023/025218**

(87) International publication number:
**WO 2024/010079 (11.01.2024 Gazette 2024/02)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:    **07.07.2022   JP 2022109696**
                **25.01.2023   JP 2023009377**

(71) Applicant: **Idemitsu Kosan Co.,Ltd.**
**Tokyo 100-8321 (JP)**

(72) Inventors:
- **OKAMOTO, Yuji**
  **Tokyo 100-8321 (JP)**
- **KAKINUMA, Takahiro**
  **Tokyo 100-8321 (JP)**

(74) Representative: **Vossius & Partner**
**Patentanwälte Rechtsanwälte mbB**
**Siebertstrasse 3**
**81675 München (DE)**

(54) **METHOD FOR PRODUCING SULFIDE SOLID ELECTROLYTE**

(57)    Provided is a method for efficiently producing a sulfide solid electrolyte which has high ionic conductivity and in which an increase of particle diameters and a spread of particle size distribution are suppressed, the method including mixing, in a first solvent, a raw material-containing substance that contains a plurality of raw materials each containing at least one atom selected from a lithium atom, a phosphorus atom, a sulfur atom, and a halogen atom to obtain a solution containing an electrolyte precursor, removing the solvent from the solution to obtain the electrolyte precursor, bringing the electrolyte precursor into contact with a second solvent, and subsequently heating the mixture, wherein the second solvent differs from the first solvent and is a hydrocarbon solvent.

**Description**

Technical Field

The present invention relates to a method for producing a sulfide solid electrolyte.

Background Art

In recent years, with the rapid spread of information-related devices such as personal computers, video cameras, and mobile phones, and communication devices and the likes, the development of batteries used as a power source for the devices has been regarded as important. Conventionally, electrolytic solution containing flammable organic solvents have been used in batteries used for such applications, however by making the battery all-solid, a battery in which the electrolytic solution is replaced with a solid electrolyte layer has been developed because a flammable organic solvent is not used in the battery, simplification of safety devices is achieved, and the production cost and productivity are excellent.

Methods for producing a solid electrolyte used for a solid electrolyte layer are broadly divided into a solid phase method and a liquid phase method, and the liquid phase method includes a homogeneous method in which a solid electrolyte material is completely dissolved in a solvent, and a heterogeneous method in which a solid electrolyte material is not completely dissolved and a solid electrolyte is produced through a suspension of a solid-liquid coexistence. For example, among the liquid phase methods, as a homogeneous method, a method of dissolving a solid electrolyte in a solvent and re-precipitating the solid electrolyte is known (for example, see PTL 1), and further, as a heterogeneous method, a method of reacting a raw material such as lithium sulfide in a solvent containing a polar aprotic solvent (for example, see PTLs 2 and 3), and moreover, a method for producing a solid electrolyte using a specific compound having an amino group as a complexing agent (for example, see PTLs 4 and 5) are known. NPL 1 describes a method of preparing a tetrahydrofuran-ethanol precursor solution of $Li_6PS_5Br$ using tetrahydrofuran and ethanol, drying the solution, and heating the solution to produce a solid electrolyte having an argyrodite type crystal structure having a composition of $Li_6PS_5Br$.

NPLs 2 and 3 disclose that a crystalline solid electrolyte having a composition of $Li_7P_3S_{11}$ is produced by adding $Li_2S$, $P_2S_5$, and S (in a molar ratio of 7 : 3 : x (x = 3, 5, and 7)) to a mixed solvent of acetonitrile, tetrahydrofuran, and ethanol (volume ratio of 1 : 1 : 0.05) to generate lithium polysulfides and highly reactive sulfur radicals, which are then stirred for several minutes, dried under vacuum, and heated at a heating temperature of 270°C, 350°C, etc.

Also known are a method for producing a sulfide based solid electrolyte by contacting a mixture containing an alkali metal sulfide and sulfur with a sulfur compound such as phosphorus sulfide (see, for example, PTL 6); a sulfide solid electrolyte obtained by mixing $Li_2S$ and $P_2S_5$ in an organic solvent such as tetrahydrofuran and dimethoxy ethane, and precipitating the mixture (see, for example, PTL 7); a method for producing a solid electrolyte by supplying a liquid containing a raw material containing lithium, phosphorus, sulfur, and chlorine and a solvent such as ethanol to a liquid or gas having a temperature higher than the boiling point of the solvent, and evaporating the solvent while reacting the raw materials to precipitate an argyrodite type crystal structure (see, for example, PTL 8); and the likes.

Citation List

Patent Literature

PTL 1:JP 2014-191899 A

PTL 2:WO 2014/192309 A

PTL 3:WO 2018/054709 A

PTL 4:WO 2020/105737 A

PTL 5:WO 2021/230189 A

PTL 6:JP 2014-220051 A

PTL 7:JP 2015-232965 A

PTL 8:JP 2019-169459 A

Non Patent Literature

NPL 1:J. Mater. Chem. A, 2019, 7, 558-566
NPL 2:The 62nd Battery Symposium in Japan proceedings, published on November 29, 2021, All-solid Battery/-Sulfide Electrolyte, 3E01
NPL 3:Adv. Energy Sustenability Res. 2022, 2200019

Summary of Invention

Technical Problem

The present invention has been made in view of such a situation, and an object of the present invention is to efficiently provide a sulfide solid electrolyte which has high ionic conductivity and in which an increase of particle diameters and a spread of particle size distribution are suppressed.

Solution to Problem

A method for producing a sulfide solid electrolyte according to the present invention is

a method for producing a sulfide solid electrolyte including
mixing, in a first solvent, a raw material-containing substance that contains a plurality of raw materials each containing at least one atom selected from a lithium atom, a phosphorus atom, a sulfur atom, and a halogen atom to obtain a solution containing an electrolyte precursor,
removing the solvent from the solution to obtain the electrolyte precursor,
bringing the electrolyte precursor into contact with a second solvent, and
subsequently heating the mixture, wherein
the second solvent differs from the first solvent and is a hydrocarbon solvent.

Advantageous Effects of Invention

According to the present invention, it is possible to efficiently provide a sulfide solid electrolyte which has high ionic conductivity and in which an increase of particle diameters and a spread of particle size distribution are suppressed.

Brief Description of Drawings

Fig. 1 is an X-ray diffraction spectrum of the powder obtained in Example 1.
Fig. 2 is an X-ray diffraction spectrum of the powder obtained in Example 2.
Fig. 3 is an X-ray diffraction spectrum of the powder obtained in Example 3.
Fig. 4 is an X-ray diffraction spectrum of the powder obtained in Example 4.
Fig. 5 is an X-ray diffraction spectrum of the powder obtained in Example 5.
Fig. 6 is an X-ray diffraction spectrum of the powder obtained in Comparative Example 1.
Fig. 7 is an X-ray diffraction spectrum of the powder obtained in Example 6.
Fig. 8 is an X-ray diffraction spectrum of the powder obtained in Comparative Example 2.
Fig. 9 is an X-ray diffraction spectrum of the powder obtained in Example 7.
Fig. 10 is an X-ray diffraction spectrum of the powder obtained in Example 8.
Fig. 11 is an X-ray diffraction spectrum of the powder obtained in Comparative Example 3.

Description of Embodiments

Hereinafter, an embodiment of the present invention (hereinafter, sometimes referred to as "the present embodiment") will be described. In addition, in the description herein, the numerical values of the upper limit and the lower limit relating to the numerical range of "or more", "or less", and "to" are numerical values that can be arbitrarily combined, and the numerical values of the examples can also be used as the numerical values of the upper limit and the lower limit. Further, the specifications considered to be preferable can be arbitrarily adopted. That is, one specification considered to be preferable can be adopted in combination with one or a plurality of other specifications considered to be preferable. It can be said to be more desirable to combine the preferred ones with each other.

(Findings Obtained by the Inventors to Reach the Present Invention)

As a result of intensive studies to solve the above-described problems, the present inventors have found the following matters, and have completed the present invention.

In order to put all-solid batteries into practical use in recent years, a liquid phase method has attracted attention as a method capable of being simply synthesized in a large amount in addition to versatility and applicability. A solid phase method, as typified by a mechanical milling method, includes a method of grinding and mixing raw materials in a grinder and reacting the raw materials obtain a solid electrolyte. However, the cost of equipment is high and a large initial investment is required, making it difficult to reduce costs.

On the other hand, in the liquid phase method for producing a sulfide solid electrolyte disclosed in the above patent literatures and non-patent literatures, granulation may occur due to high temperature heating during crystallization, resulting in large particle diameter. Therefore, when using the obtained sulfide solid electrolyte for the production of a lithium ion battery, it becomes necessary to adjust the particle diameter in advance, which causes a problem of reduced production efficiency. Thus, in the production of a sulfide solid electrolyte, it becomes necessary to consider not only the production efficiency due to the promotion of the reaction of the raw materials, but also the production efficiency in the production of a lithium ion battery after the sulfide solid electrolyte is obtained.

The present inventors have noticed that the above-mentioned patent literatures and non-patent literatures disclosing the liquid phase method do not raise any problem that granulation occurs due to heating and particle diameter increases when heating is performed for crystallization. In addition, when a sulfide solid electrolyte having an argyrodite type crystal structure is to be obtained among sulfide solid electrolytes, as is clear from the production method disclosed in PTL 8, for example, heating at a high temperature of about 430°C is inevitable. Therefore, granulation occurs more easily, and the tendency that the particle diameter increases becomes prominent.

The present inventors have conducted research into the occurrence of granulation and an increase in particle diameter due to heating, and have found that granulation due to heating is influenced by the residual solvent used in the reaction of the raw materials. It has been found that this tendency is more pronounced when, for example, tetrahydrofuran, ethanol, or a solvent called a complexing agent having a nitrogen atom, which are also used in the above patent literatures, is used.

Thus, in the liquid phase method, in which the reaction of the raw materials is carried out in a solution, it has been found that when heating for crystallization is carried out while the solvent used remains, the remaining solvent increases the binding force between particles, making granulation more likely to occur due to aggregation. Therefore, the present inventors have found that when an electrolyte precursor obtained by removing a solvent from a solution in which raw materials are mixed in a solvent is contacted with a solvent different from the aforementioned solvent, the sulfide solid electrolyte obtained by subsequent heating is not granulated, and an increase in particle diameter and a spread of the particle size distribution are suppressed.

(Regarding various aspects of the present embodiment)

The method for producing a sulfide solid electrolyte according to a first aspect of the present embodiment is

a method for producing a sulfide solid electrolyte including
mixing, in a first solvent, a raw material-containing substance that contains a plurality of raw materials each containing at least one atom selected from a lithium atom, a phosphorus atom, a sulfur atom, and a halogen atom to obtain a solution containing an electrolyte precursor,
removing the solvent from the solution to obtain the electrolyte precursor,
bringing the electrolyte precursor into contact with a second solvent, and
subsequently heating the mixture, wherein
the second solvent differs from the first solvent and is a hydrocarbon solvent.

In the method for producing a sulfide solid electrolyte of the present embodiment, the mixing of the raw material-containing substance is carried out in the first solvent, so a liquid phase method is adopted. Therefore, the production method of the present embodiment makes it possible to produce the sulfide solid electrolyte extremely efficiently.

The production method of the present embodiment includes mixing the raw material-containing substance in the first solvent, thereby obtaining a solution containing an electrolyte precursor. That is, as the first solvent, a solvent capable of dissolving the raw materials contained in the raw material-containing substance and reaction products of these raw materials is adopted. By dissolving in the solvent in this way, the reaction between the raw materials contained in the raw material-containing substance proceeds quickly, and thus the sulfide solid electrolyte is obtained very efficiently.

Here, the "electrolyte precursor" refers to a precursor of a sulfide solid electrolyte obtained by the production method of the present embodiment, and is different from the raw materials contained in the raw material-containing substance and also different from the sulfide solid electrolyte obtained by heating. More specifically, it is a product of the reaction between the raw materials and the first solvent that are mixed to obtain a solution containing the electrolyte precursor in the production method of the present embodiment.

The presence of the "electrolyte precursor" can be confirmed, for example, by analyzing the "electrolyte precursor" by FT-IR (diffuse reflectance method), by detecting a peak different from that of the raw materials and the sulfide solid electrolyte, and by detecting a similar peak by powder X-ray diffraction (XRD) measurement.

In the production method of the present embodiment, the solvent is removed from the solution obtained by mixing, thereby obtaining an electrolyte precursor, which is a solute dissolved in the solution. Then, the obtained electrolyte precursor is brought into contact with the second solvent. Here, by adopting a solvent that is different from the first solvent and is a hydrocarbon solvent as the second solvent, the first solvent attached to the electrolyte precursor can be washed and removed.

The electrolyte precursor is then heated while being accompanied by the second solvent. By heating the electrolyte precursor, an amorphous sulfide solid electrolyte or even a crystalline sulfide solid electrolyte can be produced depending on the heating conditions.

Here, the first solvent attached to the electrolyte precursor is replaced by the second solvent, which is a hydrocarbon solvent, and is thus removed by evaporation or combustion due to heating. Therefore, even if the electrolyte precursor is heated, granulation due to heating caused by residual solvent does not occur. In addition, the first solvent contributing to the formation of the electrolyte precursor is removed from the structure of the electrolyte precursor, and reactions such as decomposition of the electrolyte precursor progress, and the electrolyte precursor becomes a sulfide solid electrolyte. Thus, according to the production method of the present embodiment, it is possible to efficiently provide a sulfide solid electrolyte in which an increase of particle diameters and a spread of particle size distribution are suppressed.

The method for producing a sulfide solid electrolyte according to a second aspect of the present embodiment is a method in which, in the first aspect,
the hydrocarbon solvent is at least one organic solvent selected from an aliphatic hydrocarbon solvent, an alicyclic hydrocarbon solvent, and an aromatic hydrocarbon solvent.

When the hydrocarbon solvent of the second solvent is at least one organic solvent selected from an aliphatic hydrocarbon solvent, an alicyclic hydrocarbon solvent, and an aromatic hydrocarbon solvent, the first solvent attached to the electrolyte precursor can be more easily washed and removed, and thus a sulfide solid electrolyte in which an increase of particle diameters and a spread of particle size distribution are more efficiently suppressed can be obtained.

The method for producing a sulfide solid electrolyte according to a third aspect of the present embodiment is a method in which, in the first or second aspect,
lithium halide has a solubility of 0.5% by mass or less in the hydrocarbon solvent at 25°C.

In the production method of the present embodiment, it is preferable to adopt a hydrocarbon solvent in which lithium halide has a low solubility, so that the solubility of lithium halide in the hydrocarbon solvent of the second solvent at 25°C is 0.5% by mass or less. When such a hydrocarbon solvent is used, the lithium atoms and halogen atoms contained in the electrolyte precursor are not taken up by the second solvent, but can be retained in the electrolyte precursor. Therefore, it is not only possible to wash and remove the first solvent , but also to retain a larger number of lithium atoms and halogen atoms supplied as raw materials in the electrolyte precursor, improving ionic conductivity.

The method for producing a sulfide solid electrolyte according to a fourth aspect of the present embodiment is a method in which, in any one of the first to third aspects,

the hydrocarbon solvent is an aromatic hydrocarbon solvent;
the method for producing a sulfide solid electrolyte according to a fifth aspect is a method in which, in the fourth aspect, the aromatic hydrocarbon solvent is an alkylbenzene; and
the method for producing a sulfide solid electrolyte according to a sixth aspect is a method in which, in the fifth aspect, the alkylbenzene has an alkyl group having 1 to 4 carbon atoms.

When the second solvent is an aromatic hydrocarbon solvent, in particular an alkylbenzene, particularly an alkylbenzene having an alkyl group having 1 to 4 carbon atoms, the effect of using the second solvent described above can be obtained more efficiently.

The method for producing a sulfide solid electrolyte according to a seventh aspect of the present embodiment is a method in which, in any one of the first to sixth aspects,
the second solvent is used in the contact in an amount of 50 parts by mass or more and 10,000 parts by mass or less based on 100 parts by mass of the electrolyte precursor.

By setting the amount of the second solvent to be used within the above range, the effect of using the second solvent described above can be obtained more efficiently.

The method for producing a sulfide solid electrolyte according to an eighth aspect of the present embodiment is a method in which, in any one of the first to seventh aspects, the contact is performed at least once.

In the production method of the present embodiment, the contact may be performed once or twice or more, and can be appropriately determined as necessary.

The method for producing a sulfide solid electrolyte according to a ninth aspect of the present embodiment is a method in which, in any one of the first to eighth aspects,

the raw material-containing substance contains elemental sulfur.

When elemental sulfur is used as a raw material, it is believed that, by combining it with a raw material containing lithium atoms such as lithium sulfide, the elemental sulfur reacts with the raw material containing lithium atoms such as lithium sulfide in the solvent to form lithium polysulfides, and sulfur radicals are generated. Sulfur radicals are highly reactive, and promote reactions with other raw materials, such as diphosphorus pentasulfide and other raw materials containing halogen atoms, to generate soluble polysulfides (hereinafter simply referred to as "polysulfides"), which are precursors of sulfide solid electrolytes, that is, electrolyte precursors. By decomposing the polysulfides by heating or the like, a sulfide solid electrolyte with improved ionic conductivity can be efficiently produced.

By using a raw material-containing substance containing elemental sulfur as a raw material and mixing it in the first solvent, a soluble polysulfide, which is an electrolyte precursor, is generated. Furthermore, by heating, the polysulfide is decomposed to become an amorphous sulfide solid electrolyte or a crystalline sulfide solid electrolyte, and the crystallinity of the crystalline sulfide solid electrolyte is improved. Here, by contacting the electrolyte precursor (polysulfide) with the second solvent before heating, the first solvent attached to the electrolyte precursor can be washed and removed. Therefore, even if the electrolyte precursor (polysulfide) is heated, granulation due to heating caused by the residual solvent does not occur, and a sulfide solid electrolyte in which an increase of particle diameters and a spread of particle size distribution are suppressed can be provided.

When using a raw material-containing substance containing elemental sulfur, heating is performed mainly for the decomposition of the polysulfide, removal of the solvent, and crystallization. In addition, although the removal of elemental sulfur generated by the decomposition of the polysulfide can also be performed by evaporation through heating, methods other than heating, such as solvent washing and hydrodesulfurization, may also be applied.

The method for producing a sulfide solid electrolyte according to a tenth aspect of the present embodiment is a method in which, in the ninth aspect,

the first solvent is an organic solvent containing at least one atom selected from an oxygen atom and a nitrogen atom, and the method for producing a sulfide solid electrolyte according to an eleventh aspect is a method in which, in the tenth aspect,

the organic solvent includes at least one organic solvent selected from an alcohol solvent, an ether solvent, and a nitrile solvent.

The second solvent is different from the first solvent and is a hydrocarbon solvent. In relation to the second solvent, it is preferable to use a solvent containing at least one atom selected from an oxygen atom and a nitrogen atom, that is, an atom called a heteroatom, as the first solvent. When such a first solvent is used, the generation of sulfur radicals is promoted through the reaction of elemental sulfur and lithium sulfide to produce lithium polysulfides. Since sulfur radicals are highly reactive, they act on other raw materials, such as diphosphorus pentasulfide and other raw materials containing halogen atoms, and react with lithium sulfide or lithium polysulfide to promote the generation of soluble polysulfide. The soluble polysulfide is a precursor of a sulfide solid electrolyte, and when heated, the polysulfide is decomposed to quickly become an amorphous sulfide solid electrolyte or a crystalline sulfide solid electrolyte, and the crystallinity of the crystalline sulfide solid electrolyte is improved. As a result, a sulfide solid electrolyte having few impurities and a high ionic conductivity can be efficiently obtained.

In addition, as a solvent containing such a heteroatom, it is preferable to use at least one of an alcohol solvent, an ether solvent, and a nitrile solvent. The use of these solvents promotes the effect of using a solvent containing the heteroatom, namely, the generation of sulfur radicals and the formation of an electrolyte precursor (polysulfide). In addition, the combined use of an alcohol solvent, an ether solvent, and a nitrile solvent promotes the generation of sulfur radicals and the formation of an electrolyte precursor (polysulfide) in a well-balanced manner. As a result, a sulfide solid electrolyte having few impurities and a high ionic conductivity can be efficiently obtained.

The method for producing a sulfide solid electrolyte according to a twelfth aspect of the present embodiment is a method in which, in any one of the ninth to eleventh aspects, the heating temperature in the heating is 20°C or higher and 500°C or lower.

As described above, in the production method of the present embodiment, by heating the electrolyte precursor, an amorphous sulfide solid electrolyte or even a crystalline sulfide solid electrolyte can be produced depending on the heating conditions. Here, when the raw material-containing substance contains elemental sulfur, an electrolyte precursor (polysulfide) is generated as described above. Therefore, when the raw material-containing substance contains elemental sulfur, the heating includes not only producing the amorphous sulfide solid electrolyte and further the crystalline sulfide solid electrolyte, but also decomposing the electrolyte precursor (polysulfide). When the heating temperature in the heating is within the above range, it is possible to perform more efficient and reliable decomposition and crystallization of the electrolyte precursor (polysulfide).

The method for producing a sulfide solid electrolyte according to a thirteenth aspect of the present embodiment is a method in which, in any one of the ninth to twelfth aspects,
the elemental sulfur is used in an amount of 0.5 moles or more based on 1.0 mole of the lithium sulfide.

The amount of elemental sulfur used relative to lithium sulfide can be adopted without any particular restrictions, but it is preferable to be used in a certain amount or more, such as 0.5 moles or more based on 1.0 mole of lithium sulfide. The amount used is, as will be described in detail later, likely to be an excessive amount compared to the sulfur atoms required for the sulfide solid electrolyte to be obtained. In this way, the excessive use of elemental sulfur promotes the generation of sulfur radicals, and as a result, a sulfide solid electrolyte with improved ionic conductivity can be efficiently produced.

The method for producing a sulfide solid electrolyte according to a fourteenth aspect of the present embodiment is a method in which, in any one of the first to eighth aspects,

the raw material-containing substance contains lithium sulfide, phosphorus sulfide, and at least one halogen atom-containing raw material selected from lithium halide and elemental halogen,

and the method for producing a sulfide solid electrolyte according to a fifteenth aspect of the present embodiment is a method in which, in any one of the first to ninth aspects,

the raw material-containing substance does not contain elemental sulfur.

In the production method of the present embodiment, it is also preferable to adopt a raw material-containing substance containing lithium sulfide, phosphorus sulfide, and at least one halogen atom-containing raw material selected from lithium halide and elemental halogen, as the raw material-containing substance other than the raw material-containing substance containing elemental sulfur in the ninth aspect. In the production method of the present embodiment, even if the electrolyte precursor uses various raw material-containing substances, it is possible to efficiently provide a sulfide solid electrolyte in which an increase of particle diameters and a spread of particle size distribution are suppressed. That is, in the production method of the present embodiment, it is extremely important to bring the electrolyte precursor into contact with the second solvent.

According to the production method of the present embodiment, it can be said that, as long as the electrolyte precursor is obtained by mixing the above-mentioned raw material-containing substance with the first solvent, by contacting the electrolyte precursor with the second solvent, it is possible to obtain an effect of efficiently providing a sulfide solid electrolyte in which an increase of particle diameters and a spread of particle size distribution are suppressed.

The method for producing a sulfide solid electrolyte according to a sixteenth aspect of the present embodiment is a method that, in the fourteenth or fifteenth aspect,

includes, prior to heating, heat treating the electrolyte precursor while supplying hydrogen sulfide,

and the method for producing a sulfide solid electrolyte according to a seventeenth aspect is a method in which, in any one of the fourteenth to sixteenth aspects,

the first solvent contains an alcohol solvent and an ether solvent.

The heat treating of the electrolyte precursor while supplying hydrogen sulfide is particularly effective when adopting a raw material-containing substance containing lithium sulfide, phosphorus sulfide, and at least one halogen atom-containing raw material selected from lithium halide and elemental halogen, and further a raw material-containing substance that does not contain elemental sulfur, as the raw material-containing substance. Moreover, in this case, the first solvent preferably contains an alcohol solvent and an ether solvent. By using such a solvent, the electrolyte precursor can be easily obtained, and thus the sulfide solid electrolyte can be obtained more efficiently.

The electrolyte precursor is formed by mixing the raw material-containing substance in the first solvent; however, some of the raw materials contained in the raw material-containing substance may remain as raw materials. For example, when lithium sulfide ($Li_2S$) is used as a raw material, lithium sulfide ($Li_2S$) may remain as it is. Solvents containing oxygen atoms, such as alcohol solvents, which are preferably used in the production method of the present embodiment, are excellent in that an electrolyte precursor can be easily obtained and the amount of remaining raw materials can be reduced, as described above. On the other hand, because of its high reactivity, it easily reacts with lithium sulfide to produce lithium alkoxide such as lithium ethoxide, and lithium sulfide, which can react with other raw materials, may not contribute to the reaction with other raw materials. If the lithium alkoxide remains as it is, the purity of the sulfide solid electrolyte decreases, and the lithium alkoxide may be carbonized by calcination and remain, which may lead to a decrease in quality such as a decrease in ionic conductivity.

In this way, when a solvent containing an alcohol solvent and an ether solvent is used as the first solvent, lithium alkoxide may be generated along with the electrolyte precursor. Here, by heat treating the electrolyte precursor while supplying hydrogen sulfide, the remaining lithium alkoxide can be converted to lithium sulfide ($Li_2S$). Specifically, reactions of the following reaction formulas (1) to (3) are considered to occur.

$$Li_2S + EtOH \rightarrow EtOLi + LiSH \qquad (1)$$

$$2LiSH \rightarrow Li_2S + H_2S \qquad (2)$$

$$2EtOLi + H_2S \rightarrow Li_2S + 2EtOH \qquad (3)$$

The above reaction assumes the use of lithium sulfide ($Li_2S$) as the raw material and ethanol (EtOH) as the alcohol solvent of the first solvent. If lithium sulfide ($Li_2S$) exists as it is, it reacts with ethanol to produce lithium ethoxide (LiOEt) and lithium hydrosulfide (LiSH) as shown in the reaction formula (1). Lithium hydrosulfide (LiSH) decomposes as shown in the reaction formula (2) to produce lithium sulfide ($Li_2S$) and hydrogen sulfide.

As shown in the reaction formula (3), lithium ethoxide (LiOEt) produced in the reaction formula (1) reacts with hydrogen sulfide produced in the reaction formula (2) and hydrogen sulfide supplied separately to produce lithium sulfide ($Li_2S$). Lithium sulfide ($Li_2S$) produced according to the reaction formula (3) may react with other raw materials to form a sulfide solid electrolyte, and even if it remains as it is, it does not cause a decrease in the ionic conductivity of the sulfide solid electrolyte. In this way, by performing the heat treatment while supplying hydrogen sulfide, it is possible to suppress the remaining impurities such as lithium alkoxide and the loss of raw materials, and to improve the quality of the sulfide solid electrolyte.

In addition, in the production method of the present embodiment, the electrolyte precursor is brought into contact with the second solvent, so that the first solvent attached to the surface of the electrolyte precursor can be removed, and impurities such as lithium alkoxide can also be removed. Therefore, in addition to the inherent effect of suppressing an increase of particle diameters and a spread of the particle size distribution, it is also possible to further suppress the remaining impurities such as lithium alkoxide and the loss of raw materials, and to further improve the quality of the sulfide solid electrolyte.

The method for producing a sulfide solid electrolyte according to an eighteenth aspect of the present embodiment is a method in which, in the seventeenth aspect,

in the obtaining of a solution containing the electrolyte precursor, the raw material-containing substance is mixed in an ether solvent, and then an alcohol solvent is added and mixed.

As described above, the first solvent may contain an alcohol solvent and an ether solvent, and a mixed solvent containing an alcohol solvent and an ether solvent may be used all at once, or, as in the eighteenth aspect, an alcohol solvent and an ether solvent may be used in stages.

In the following explanation of the eighteenth aspect, of the first solvent, the solvent that is mixed with the raw material-containing substance first is referred to as the solvent 1-1, and the solvent that is used next is referred to as the solvent 1-2.

The eighteenth aspect is an aspect in which, when a solvent containing an alcohol solvent and an ether solvent is used as the first solvent, the ether solvent is used as the solvent 1-1, and the alcohol solvent is used as the solvent 1-2. That is, this specifies a preferred order of use of the alcohol solvent and the ether solvent when a solvent containing an alcohol solvent and an ether solvent is used as the first solvent.

In a production method using a liquid phase method, it is preferable that lithium sulfide, diphosphorus pentasulfide, and raw materials containing halogen atoms such as lithium bromide, lithium iodide, and lithium chloride are not separated in the liquid phase and contribute to the formation of the electrolyte precursor. As mentioned above, using an alcohol solvent as the first solvent is effective in promoting the formation of an electrolyte precursor; however, because of its high reactivity, it is easy to convert lithium sulfide into lithium alkoxide. It is also known that it is highly reactive, especially with raw materials containing halogen atoms. In this way, when the first solvent is a solvent containing an ether solvent and an alcohol solvent, separation and loss of a part of the raw materials are likely to occur.

In the eighteenth aspect, an ether solvent is first used as the solvent 1-1 to prepare a mixture with the raw material-containing substance, that is, a mixture is formed without completely dissolving the raw material-containing substance. The raw material-containing substance does not dissolve completely in the solvent 1-1, so the reaction is slow, and the solvent and the raw materials form a bonded state due to some force (intermolecular force, chemical bond, etc.). In particular, the raw materials form a loosely bonded state with the solvent, which can suppress the loss of the raw materials.

Next, the mixture is mixed with the solvent 1-2 to obtain a solution containing the electrolyte precursor. As described above, in the mixture, the raw materials contained in the raw material-containing substance are held in a bonded state between the raw materials and with the solvent; however, by mixing the mixture with the solvent 1-2, the raw materials dissolve while maintaining a loose bond with the solvent 1-1, and a solution in which the electrolyte precursor has been dissolved is obtained.

Here, the raw materials are supplied to the solvent 1-2 in a state where the raw materials are bonded to each other and further in a loosely bonded state with the solvent 1-1, and thus the electrolyte precursor is formed without separation or loss due to reaction between the raw materials and the solvent 1-2, and contributes to the formation of the sulfide solid electrolyte. For example, as described above, even when phosphorus sulfide (e.g., diphosphorus pentasulfide ($P_2S_5$)) is used as a raw material, dissolution and reaction of phosphorus sulfide and its reactants in the solvent 1-2 can be suppressed, and phosphorus sulfide can contribute to the formation of the sulfide solid electrolyte without separation and loss.

In this way, by using the solvent 1-1 and the solvent 1-2 separately, it is possible to suppress the separation and loss of various raw materials such as lithium sulfide, phosphorus sulfide, and lithium halide, which are preferably used as raw materials.

The method for producing a sulfide solid electrolyte according to a nineteenth aspect of the present embodiment is a method in which, in any one of the fourteenth to eighteenth aspects,

the heating temperature in the heating is 150°C or higher.

When the raw material-containing substance contains lithium sulfide, phosphorus sulfide, and at least one halogen atom-containing raw material selected from lithium halides and elemental halogen, heating at the above heating temperature makes it possible to more efficiently produce an amorphous sulfide solid electrolyte, and further a crystalline sulfide solid electrolyte.

The method for producing a sulfide solid electrolyte according to a twentieth aspect of the present embodiment is a method in which, in any one of the first to nineteenth aspects,

the halogen atom is at least one atom selected from a chlorine atom, a bromine atom, and an iodine atom.

When the sulfide solid electrolyte contains a halogen atom, it has high ionic conductivity. Among the halogen atoms, by containing at least one halogen atom selected from a chlorine atom, a bromine atom, and an iodine atom, it becomes easy to form an argyrodite type crystal structure or a thio-LISICON Region II type crystal structure, which exhibits particularly high ionic conductivity.

The method for producing a sulfide solid electrolyte according to a twenty-first aspect of the present embodiment is a method in which, in the first to twentieth aspects,

a crystalline sulfide solid electrolyte having an argyrodite type crystal structure or a thio-LISICON Region II type crystal structure is produced.

In the production method of the present embodiment, it is possible to produce a desired sulfide solid electrolyte by changing the type and blending ratio of the raw materials contained in the raw material-containing substance. A crystalline sulfide solid electrolyte having an argyrodite type crystal structure and a crystalline sulfide solid electrolyte having a thio-LISICON Region II type crystal structure are known as sulfide solid electrolytes with extremely high ionic conductivity, and are preferable as the sulfide solid electrolytes to be obtained by the production method of the present embodiment.

(Sulfide Solid Electrolyte)

In the description herein, the "solid electrolyte" means an electrolyte that maintains a solid state at 25°C under a nitrogen atmosphere. The sulfide solid electrolyte in the present embodiment contains at least one atom selected from a lithium atom, a phosphorus atom, a sulfur atom, and a halogen atom, and preferably has ionic conductivity attributed to the lithium atom.

The "sulfide solid electrolyte" includes both an amorphous sulfide solid electrolyte and a crystalline sulfide solid electrolyte.

In the description herein, the crystalline sulfide solid electrolyte is a sulfide solid electrolyte in which a peak derived from the solid electrolyte is observed in an X-ray diffraction pattern in X-ray diffractometry, and the presence or absence of a peak derived from a raw material of the sulfide solid electrolyte is not considered. That is, the crystalline sulfide solid electrolyte includes a crystal structure derived from the solid electrolyte, and a part thereof may be a crystal structure derived from the solid electrolyte, or the whole thereof may be a crystal structure derived from the solid electrolyte. As long as the crystalline sulfide solid electrolyte has the X-ray diffraction pattern as described above, a part of the crystalline sulfide solid electrolyte may include an amorphous sulfide solid electrolyte. Therefore, the crystalline sulfide solid electrolyte includes a so-called glass ceramic obtained by heating an amorphous sulfide solid electrolyte to a crystallization temperature or higher.

In addition, in the description herein, the amorphous sulfide solid electrolyte is a halo pattern in which a peak other than a peak derived from a material is not substantially observed in an X-ray diffraction pattern by an X-ray diffractometry, and the presence or absence of a peak derived from a raw material of the sulfide solid electrolyte does not matter.

[Method for Producing Sulfide Solid Electrolyte]

The method for producing a sulfide solid electrolyte according to the present embodiment is

a method for producing a sulfide solid electrolyte including
mixing, in a first solvent, a raw material-containing substance that contains a plurality of raw materials each containing at least one atom selected from a lithium atom, a phosphorus atom, a sulfur atom, and a halogen atom to obtain a solution containing an electrolyte precursor,
removing the solvent from the solution to obtain the electrolyte precursor,
bringing the electrolyte precursor into contact with a second solvent, and
subsequently heating the mixture, wherein
the second solvent differs from the first solvent and is a hydrocarbon solvent.

As described above, according to the production method of the present embodiment, as long as the electrolyte precursor is obtained by mixing the above-mentioned raw material-containing substance with the first solvent, by contacting the electrolyte precursor with the second solvent, it is possible to obtain an effect of efficiently providing a sulfide solid electrolyte in which an increase of particle diameters and a spread of particle size distribution are suppressed. As such, in the production method of the present embodiment, it is extremely important to bring the electrolyte precursor into contact with the second solvent, and thus the contact will be described first.

[Contacting the electrolyte precursor with the second solvent]

The production method of the present embodiment includes contacting the electrolyte precursor obtained in obtaining a solution containing the electrolyte precursor with a second solvent. As described above, this makes it possible to provide a sulfide solid electrolyte in which granulation due to heating caused by the residual first solvent does not occur, and in which an increase of particle diameters and a spread of particle size distribution are suppressed.

(Second Solvent)

The second solvent used in the production method of the present embodiment must be different from the first solvent and must be a hydrocarbon solvent. By using such a second solvent, it is possible to provide a sulfide solid electrolyte in which granulation due to heating caused by the residual first solvent does not occur, and in which an increase of particle diameters and a spread of particle size distribution are suppressed.
Preferable examples of the hydrocarbon solvent of the second solvent include hydrocarbon solvents, such as an aliphatic hydrocarbon solvent, an alicyclic hydrocarbon solvent, and an aromatic hydrocarbon solvent.
More specifically, representative preferable examples include aliphatic hydrocarbon solvents such as hexane, pentane, 2-ethylhexane, heptane, octane, decane, undecane, dodecane, and tridecane; alicyclic hydrocarbon solvents such as cyclohexane and methylcyclohexane; and aromatic hydrocarbon solvents such as benzene, toluene, xylene, mesitylene, ethylbenzene, and tert-butylbenzene.
Among the above-mentioned hydrocarbon solvents, aromatic hydrocarbon solvents are preferred, and alkylbenzenes such as toluene, xylene, mesitylene, ethylbenzene, and tert-butylbenzene are more preferred. The carbon number in the alkyl group of the alkylbenzene is preferably 1 or more, and the upper limit is preferably 4 or less, more preferably 3 or less, and even more preferably 2 or less. Here, the carbon number in the alkyl group is the number of carbon atoms in one alkyl group, and when there are a plurality of alkyl groups, it is preferable that there are a plurality of alkyl groups having the above number of carbon atoms.
In the production method of the present embodiment, the above-mentioned hydrocarbon solvent may be used alone or in combination of a plurality of kinds thereof.
As a property of the hydrocarbon solvent of the second solvent, the solubility of lithium halide at 25°C is preferably 0.5% by mass or less. When the solubility of lithium halide in the hydrocarbon solvent at 25°C is low enough to be within the above range, the lithium atoms and halogen atoms contained in the electrolyte precursor are not taken up by the second solvent and can be retained in the electrolyte precursor as described above. This not only suppresses the increase of particle diameters and the spread of the particle size distribution, but also improves the ionic conductivity of the resulting solid electrolyte.
From the same viewpoint, the solubility is more preferably 0.4% by mass or less, and even more preferably 0.2% by mass or less. There is no particular limit to the lower limit of the solubility, and it is preferably 0% by mass, i.e., no dissolution at all, but in reality it is 0.01% by mass or more.
The amount of the second solvent used in the contact is not particularly limited as long as the first solvent can be removed, and may be, for example, 50 parts by mass or more and 10,000 parts by mass or less based on 100 parts by mass of the electrolyte precursor. From the viewpoint of removing the first solvent more efficiently and reliably, the amount of the second solvent to be used is preferably 100 parts by mass or more, more preferably 300 parts by mass or more, and even more preferably 500 parts by mass or more, and the upper limit is preferably 8,000 parts by mass or less, more preferably 5,000 parts by mass or less, and even more preferably 3,000 parts by mass or less.

The contact between the electrolyte precursor and the second solvent is preferably performed at least once. From the viewpoint of removing the first solvent more efficiently and reliably, it is preferably performed twice or more, and the upper limit is preferably eight times or less, and more preferably four times or less.

There is no particular restriction on the method of contacting the electrolyte precursor with the second solvent, so long as the two are in contact. For example, the contact may be performed by a method generally called solvent washing, in which the electrolyte precursor and the second solvent are mixed and then subjected to operations such as decantation and filtering using a glass filter to remove the second solvent.

The temperature condition for contacting the electrolyte precursor with the second solvent is not particularly limited, and is, for example, -10 to 130°C, preferably 10 to 120°C, and more preferably room temperature (20°C) to 110°C. When the temperature is within the above temperature range, it is easier to suppress the increase of particle diameters and the increase in particle size distribution.

In addition to suppressing the increase of particle diameters and the increase in particle size distribution, from the viewpoint of reducing the particle diameter and reducing the particle size distribution, the temperature is preferably 40 to 130°C, more preferably 60 to 120°C, even more preferably 80 to 110°C, and still more preferably 90 to 105°C.

[Other than the above contact]

Next, other than "contacting the electrolyte precursor with the second solvent", "obtaining a solution containing an electrolyte precursor", "obtaining an electrolyte precursor", and "heating" will be described in this order.

As described above, in the production method of the present embodiment, as long as the electrolyte precursor is obtained by mixing the above-mentioned raw material-containing substance with the first solvent, by contacting the electrolyte precursor with the second solvent, it is possible to efficiently produce a sulfide solid electrolyte in which an increase of particle diameters and a spread of particle size distribution are suppressed. The electrolyte precursor can vary mainly depending on the raw materials contained in the raw material-containing substance, and is preferably divided into the following two forms (i) and (ii) depending on the raw material-containing substance. Therefore, the raw material-containing substance will be described in the following cases.

Embodiment (i) a case where elemental sulfur is contained

Embodiment (ii) a case where lithium sulfide, phosphorus sulfide, and at least one halogen atom-containing raw material selected from lithium halide and elemental halogen are contained

Although the raw materials contained in the raw material-containing substance are different between the embodiments (i) and (ii), the operations of "obtaining a solution containing an electrolyte precursor", "obtaining an electrolyte precursor", "contacting the electrolyte precursor with the second solvent", and "heating" are performed in both embodiments. However, due to the difference in the raw materials, the conditions of "obtaining a solution containing an electrolyte precursor", "obtaining an electrolyte precursor", and "heating" may differ among the above-mentioned various operations. On the other hand, the conditions may also be the same. In addition, although the raw material-containing substance employed in the production method of the present embodiment is preferably the above-mentioned embodiment (i) and (ii), it is not limited to these embodiments.

The following will explain the "obtaining a solution containing an electrolyte precursor", "obtaining an electrolyte precursor", and "heating" in the embodiment (i), but the contents of the embodiment (ii) and the parts that apply to other embodiments also apply to the embodiment (ii) and other embodiments unless otherwise specified.

[Embodiment (i)]

In the embodiment (i), the raw material-containing substance contains a plurality of raw materials each containing at least one atom selected from a lithium atom, a phosphorus atom, a sulfur atom, and a halogen atom, and contains elemental sulfur.

[Obtaining a solution containing an electrolyte precursor]

The production method of the present embodiment includes preparing an electrolyte precursor before contacting the electrolyte precursor with the second solvent. That is, the production method of the present embodiment includes mixing, in the first solvent, a raw material-containing substance that contains a plurality of raw materials each containing at least one atom selected from a lithium atom, a phosphorus atom, a sulfur atom, and a halogen atom to obtain a solution containing an electrolyte precursor.

The raw material-containing substance will be described first with respect to obtaining a solution containing an electrolyte precursor.

(Raw Material-Containing Substance)

The raw material-containing substance used in the present embodiment is a substance that contains a plurality of raw materials each containing at least one atom selected from a lithium atom, a phosphorus atom, a sulfur atom, and a halogen atom, and in the case of the embodiment (i), the raw material-containing substance contains elemental sulfur.

The atom contained in the raw material-containing substance is at least one atom selected from a lithium atom, a sulfur atom, a phosphorus atom, and a halogen atom. From the viewpoint of improving the ionic conductivity, the raw material-containing substance preferably contain a lithium atom, a sulfur atom, and a phosphorus atom, and more preferably contain a lithium atom, a sulfur atom, a phosphorus atom, and a halogen atom.

In embodiment (i), representative examples of the raw material, other than elemental sulfur, contained in the raw material-containing substance includes, a raw material containing at least two atoms selected from the above four atoms, such as lithium sulfides; lithium halides such as lithium fluoride, lithium chloride, lithium bromide, and lithium iodide ; phosphorus sulfides such as diphosphorus trisulfide ($P_2S_3$) and diphosphorus pentasulfide ($P_2S_5$); phosphorus halides such as various phosphorus fluorides ($PF_3$ and $PF_5$), various phosphorus chlorides ($PCl_3$, $PCl_5$, and $P_2Cl_4$), various phosphorus bromides ($PBr_3$ and $PBr_5$), and various phosphorus iodides ($PI_3$ and $P_2I_4$); and thiophosphoryl halides such as thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichloride fluoride ($PSCl_2F$), and thiophosphoryl dibromide fluoride ($PSBr_2F$); and halogen simple substances such as fluorine ($F_2$), chlorine ($Cl_2$), bromine ($Br_2$), and iodine ($I_2$), and preferable examples include chlorine ($Cl_2$), bromine ($Br_2$), and iodine ($I_2$).

Examples that can be used as raw materials other than the above include a raw material containing at least one atom selected from the above four kinds of atoms and containing atoms other than the four kinds of atoms, more specifically, lithium compounds such as lithium oxide, lithium hydroxide, and lithium carbonate; alkali metal sulfides such as sodium sulfide, potassium sulfide, rubidium sulfide, cesium sulfide; metal sulfides such as silicon sulfide, germanium sulfide, boron sulfide, gallium sulfide, tin sulfide ($SnS$, $SnS_2$), aluminum sulfide, and zinc sulfide; phosphate compounds such as sodium phosphate and lithium phosphate; alkali metal halides other than lithium, such as sodium halides such as sodium iodide, sodium fluoride, sodium chloride, and sodium bromide; metal halides such as aluminum halide, silicon halide, germanium halide, arsenic halide, selenium halide, tin halide, antimony halide, tellurium halide, and bismuth halide; and phosphorus oxyhalides such as phosphorus oxychloride ($POCl_3$) and phosphorus oxybromide ($POBr_3$).

In the case of the embodiment (i), the raw material-containing substance only needs to contain elemental sulfur, and considering the ease of forming polysulfides, it is preferable to contain lithium sulfide among the above. In addition, phosphorus sulfide such as diphosphorus trisulfide ($P_2S_3$) and diphosphorus pentasulfide ($P_2S_5$), halogen simple substances such as fluorine ($F_2$), chlorine ($Cl_2$), bromine ($Br_2$), and iodine ($I_2$), and lithium halides such as lithium fluoride, lithium chloride, lithium bromide, and lithium iodide are preferred. Furthermore, when introducing an oxygen atom into the solid electrolyte, phosphoric acid compounds such as lithium oxide, lithium hydroxide, and lithium phosphate are preferred.

As the halogen atom, a chlorine atom, a bromine atom and an iodine atom are preferred, and at least one selected from these atoms is preferred, and a combination of a chlorine atom and a bromine atom, or a bromine atom and an iodine atom is more preferred.

Thus, as the lithium halide, lithium chloride, lithium bromide and lithium iodide are preferred, and combinations of lithium chloride and lithium bromide, and lithium bromide and lithium iodine are more preferred. As the halogen simple substance, chlorine ($Cl_2$), bromine ($Br_2$), and iodine ($I_2$) are preferred, and combinations of chlorine ($Cl_2$) and bromine ($Br_2$), and bromine ($Br_2$) and iodine ($I_2$) are more preferred. In addition, the lithium halide and the halogen simple substance may be used alone or in combination of a plurality of kinds thereof.

In the embodiment (i), preferred examples of combinations of raw materials containing elemental sulfur include a combination of lithium sulfide, elemental sulfur, diphosphorus pentasulfide, and lithium halide, and a combination of lithium sulfide, elemental sulfur, diphosphorus pentasulfide, and a halogen simple substance. Furthermore, the lithium halide is preferably lithium chloride, lithium bromide, and lithium iodide, and more preferably the combinations of lithium chloride and lithium bromide, and lithium bromide and lithium iodine, and the halogen simple substance is preferably chlorine, bromine, and iodine, and more preferably the combinations of chlorine and bromine, and bromine and iodine.

Lithium sulfide, one of the preferred raw materials, can be produced, for example, by combining lithium hydroxide with elemental sulfur. Therefore, when the raw material-containing substance contains lithium sulfide, the lithium sulfide may be, for example, a commercially available lithium sulfide, or may be obtained by reacting a raw material containing other lithium atoms, such as lithium hydroxide, with a raw material containing sulfur atoms, such as elemental sulfur.

In the present embodiment, $Li_3PS_4$ containing a $PS_4$ structure can also be used as part of the raw material. Specifically, $Li_3PS_4$ is produced and prepared in advance, and is used as a raw material.

The content of $Li_3PS_4$ relative to the total raw materials is preferably 60 to 100% by mole, more preferably 65 to 90% by mole, and even more preferably 70 to 80% by mole.

Further, when using $Li_3PS_4$ and a halogen simple substance, the content of the halogen simple substance relative to $Li_3PS_4$ is preferably 1 to 50% by mole, more preferably 10 to 40% by mole, even more preferably 20 to 30% by mole, and further more preferably 22 to 28% by mole.

The lithium sulfide used in the present embodiment is preferably particles.

The average particle diameter ($D_{50}$) of the lithium sulfide particles is preferably 0.1 $\mu$m or more and 1000 $\mu$m or less, more preferably 0.5 $\mu$m or more and 100 $\mu$m or less, and still more preferably 1 $\mu$m or more and 20 $\mu$m or less. In the description herein, the average particle diameter ($D_{50}$) is a particle diameter which reaches 50% (volume-based) of the whole by sequentially integrating particles from the smallest particle diameter when a particle size distribution integration curve is drawn, and the volume distribution is an average particle diameter which can be measured using, for example, a laser diffraction/scattering type particle size distribution measuring device. In addition, among the raw materials exemplified above, it is preferable that the solid raw material has an average particle diameter similar to that of the lithium sulfide particles described above, that is, it is preferable that the solid raw material is within the same range as the average particle diameter of the lithium sulfide particles described above.

(Regarding the blending ratio of raw materials)

In the embodiment (i), when elemental sulfur and lithium sulfide are used, the amount of elemental sulfur used relative to lithium sulfide can be adopted without any particular restriction. When elemental sulfur is used, as described above, the elemental sulfur reacts with lithium sulfide to form lithium polysulfide, which generate sulfur radicals, and the reaction with other raw materials is promoted to obtain polysulfide, which is an electrolyte precursor.

The amount of elemental sulfur used relative to lithium sulfide cannot be generalized because it varies depending on the type of sulfide solid electrolyte to be obtained by the production method of the present embodiment. However, when the sulfide solid electrolyte contains a lithium atom, a phosphorus atom, and a sulfur atom, the amount is preferably 0.5 moles or more, and more preferably 0.7 moles or more, relative to 1.0 mole of lithium sulfide.

When the sulfide solid electrolyte contains a lithium atom, a phosphorus atom, a sulfur atom, and a halogen atom, it is preferable to use an excessive amount of more than 1.0 mole relative to 1.0 mole of lithium sulfide, more preferably 1.2 moles or more, even more preferably 1.5 moles or more, and still more preferably 1.7 moles or more. In this way, the excessive use of elemental sulfur promotes the generation of sulfur radicals, and as a result, a sulfide solid electrolyte with improved ionic conductivity can be efficiently produced.

In either of the above cases, although the upper limit is not particularly limited, from the viewpoint of obtaining a sulfide solid electrolyte more efficiently, it is sufficient to set the upper limit to about 4.0 moles or less, and preferably 3.0 moles or less.

In addition, when the sulfide solid electrolyte to be obtained by the production method of the present embodiment contains a lithium atom, a phosphorus atom, a sulfur atom, and a halogen atom, the amount of elemental sulfur used is preferably 110% or more, more preferably 130% or more, even more preferably 150% or more, and still more preferably 170% or more, based on sulfur atoms required to form the composition of the sulfide solid electrolyte. Further, although the upper limit is not particularly limited, from the viewpoint of obtaining a sulfide solid electrolyte more efficiently, it is sufficient to set the upper limit to about 300% or less, preferably 280% or less, more preferably 250% or less, and even more preferably 230% or less.

When using lithium sulfide, elemental sulfur, diphosphorus pentasulfide and lithium halide as raw materials, the ratio of lithium sulfide relative to the total of lithium sulfide and diphosphorus pentasulfide is preferably 65 to 85% by mole, more preferably 70 to 82% by mole, and even more preferably 74 to 80% by mole, from the viewpoint of obtaining higher chemical stability and higher ionic conductivity.

When using lithium sulfide, elemental sulfur, diphosphorus pentasulfide, lithium halide, and other raw materials used as necessary, the content of lithium sulfide and diphosphorus pentasulfide relative to the total of these is preferably 50 to 99% by mole, more preferably 55 to 90% by mole, and even more preferably 60 to 85% by mole.

When using lithium bromide and lithium iodide in combination as lithium halides, the ratio of lithium bromide relative to the total of lithium bromide and lithium iodide is preferably 1 to 99% by mole, more preferably 20 to 80% by mole, even more preferably 35 to 80% by mole, particularly preferably 45 to 70% by mole, from the viewpoint of improving ionic conductivity.

Furthermore, when using lithium bromide and lithium chloride in combination as lithium halides, the ratio of lithium bromide relative to the total of lithium bromide and lithium chloride is preferably 1 to 99% by mole, more preferably 15 to 75% by mole, even more preferably 25 to 60% by mole, and particularly preferably 35 to 45% by mole, from the viewpoint of improving ionic conductivity.

When using a halogen simple substance as the raw material, and when using lithium sulfide, elemental sulfur, or diphosphorus pentasulfide, the ratio of the number of moles of lithium sulfides excluding the number of moles of halogen simple substances and the same number of moles of lithium sulfides relative to the total number of moles of lithium sulfides excluding the number of moles of halogen simple substances and the same number of moles of lithium sulfides and diphosphorus pentasulfides, is preferably within the range of 60 to 90%, more preferably within the range of 65 to 85%, even more preferably within the range of 68 to 82%, further more preferably within the range of 72 to 78%, and particularly preferably within the range of 73 to 77%. This is because higher ionic conductivity can be obtained with these ratios.

Further, from the same viewpoint, when using lithium sulfide, elemental sulfur, diphosphorus pentasulfide, and a halogen simple substance, the content of the halogen simple substance relative to the total amount of lithium sulfide, diphosphorus pentasulfide, and halogen simple substance is preferably 1 to 50 % by mole, more preferably 2 to 40% by mole, even more preferably 3 to 25% by mole, and further preferably 3 to 15% by mole.

When using lithium sulfide, elemental sulfur, diphosphorus pentasulfide, halogen simple substance, and lithium halide, the content of halogen simple substance ($\alpha$% by mole) and the content of lithium halide ($\beta$% by mole) relative to the total amount of lithium sulfide, elemental sulfur, diphosphorus pentasulfide, halogen simple substance, and lithium halide, preferably satisfy the following formula (2), more preferably satisfy the following formula (3), even more preferably satisfy the following formula (4), and further more preferably satisfy the following formula (5).

$$2 \leq 2\alpha + \beta \leq 100 \ ... \ (2)$$

$$4 \leq 2\alpha + \beta \leq 80 \ ... \ (3)$$

$$6 \leq 2\alpha + \beta \leq 50 \ ... \ (4)$$

$$6 \leq 2\alpha + \beta \leq 30 \ ... \ (5)$$

When two types of halogens are used as single substances, and the number of moles of halogen atoms in one substance is A1 while the number of moles of halogen atoms in the other substance is A2, Al : A2 is preferably 1 to 99 : 99 to 1, more preferably 10 : 90 to 90 : 10, even more preferably 20 : 80 to 80 : 20, and further more preferably 30 : 70 to 70 : 30.

When two types of halogen simple substances are used and the two types of halogen simple substances are bromine and iodine, in the case where the number of moles of bromine is A1 and the number of moles of iodine is A2, A1 : A2 is preferably 1 : 99 to 99 : 1, more preferably 20 : 80 to 80 : 20, even more preferably 35 : 65 to 80 : 20, and further more preferably 45 : 55 to 70 : 30.

Further, when the two types of halogen simple substances are bromine and chlorine, and the number of moles of bromine is B1 while the number of moles of chlorine is B2, B1 : B2 is preferably 1 : 99 to 99 : 1, more preferably 15 : 85 to 75 : 25, even more preferably 25 : 75 to 60 : 40, and further more preferably 35 : 45 to 65 : 55.

The above blending ratio of the raw materials makes it easier to obtain the thio-LISICON Region II type crystal structure and the argyrodite type crystal structure, which are the preferred crystal structures of the sulfide solid electrolyte obtained by the production method of the present embodiment.

(First Solvent)

In the above embodiment (i), the first solvent used when mixing the raw materials may be a solvent different from the second solvent in relation to the second solvent. Although the first solvent may also be a hydrocarbon solvent exemplified as the second solvent and a solvent other than the hydrocarbon solvent used as the second solvent, it is preferable to use a solvent containing a heteroatom.

Preferred examples of heteroatoms contained in the solvent include oxygen atoms, nitrogen atoms, sulfur atoms, chlorine atoms, and phosphorus atoms, with oxygen atoms and nitrogen atoms being preferable. The solvent containing a heteroatom may contain one kind of these heteroatoms or a plurality of kinds of these heteroatoms.

Examples of such solvents containing heteroatoms include solvents containing oxygen atoms, such as alcohol solvents, ether solvents, ester solvents, aldehyde solvents, and ketone solvents; solvents containing nitrogen atoms, such as amine solvents and nitrile solvents; and solvents containing oxygen atoms and nitrogen atoms, such as amide solvents. Among these, alcohol solvents and ether solvents are preferred as solvents containing oxygen atoms, and nitrile solvents are preferred as solvents containing nitrogen atoms. The use of these solvents promotes the generation of sulfur radicals and the formation of an electrolyte precursor (polysulfide), and a sulfide solid electrolyte with few impurities and high ionic conductivity can be efficiently obtained.

These solvents may be used alone or in combination of a plurality of kinds thereof, and it is particularly preferable to use at least one organic solvent selected from an alcohol solvent, an ether solvent, and a nitrile solvent, and it is more preferable to use a combination of an alcohol solvent, an ether solvent, and a nitrile solvent. Since the generation of sulfur radicals and the formation of the electrolyte precursor (polysulfide) are promoted in a well-balanced manner, a sulfide solid electrolyte with few impurities and high ionic conductivity can be efficiently obtained.

(Alcohol Solvent)

Examples of the alcohol solvent include aliphatic alcohols, alicyclic alcohols, heterocyclic alcohols, and aromatic alcohols, and considering ease of availability and cost, aliphatic alcohols, alicyclic alcohols, and aromatic alcohols are preferred, with aliphatic alcohols being more preferred.

Representative examples of aliphatic alcohols include saturated or unsaturated monohydric aliphatic alcohols such as methanol, ethanol, various propanols, allyl alcohol, various butanols, and various buteneols; and saturated or unsaturated polyhydric aliphatic alcohols such as various propanediols, various propenediols, various butanediols, various butenediols, various hexanediols, various hexenediols, various butanetriols, erythritol, pentaerythritol, and dipentaerythritol.

In the present description, "various" means that all possible isomers are included, for example, for various butanols, 1-butanol, 2-butanol, 2-methyl-1-propanol, and 1,1-dimethylethanol are all included. In addition, even if "various" is not used, compounds described in a format in which the substitution position number is not specified include all possible isomers.

The aliphatic hydrocarbon group in the aliphatic alcohol may be linear or branched, and may be saturated or unsaturated.

The carbon number of the aliphatic alcohol is preferably 1 or more, more preferably 2 or more, and the upper limit is preferably 12 or less, more preferably 8 or less, and even more preferably 4 or less.

The aliphatic alcohol may be partially substituted, and preferred examples thereof include alkanolamines in which a portion of ethanolamine, propanolamine, dimethylethanolamine, etc. is substituted with an amino group, and alcohols in which a portion of fluoroalcohol, etc. is substituted with a halogen atom.

Representative preferred examples of alicyclic alcohols include monohydric or polyhydric saturated or unsaturated monocyclic alicyclic alcohols such as cyclopropanol, methylcyclopropanol, cyclopropanemethanol, cyclobutanol, cyclobutenol, cyclopentanol, cyclopentenol, cyclohexanol, methylcyclohexanol, cyclohexenol, cyclohexanediol, and cyclohexanetriol; and monohydric or polyhydric polycyclic alicyclic alcohols such as cyclopentylcyclopentanol, cyclohexylcyclohexanol, cyclohexylphenylcyclohexanol, and bicyclohexanol.

The carbon number of the alicyclic alcohol is preferably 3 or more, and the upper limit is preferably 12 or less, more preferably 10 or less, and even more preferably 8 or less.

The alicyclic alcohol may be partially substituted, and preferred examples thereof include those partially substituted with saturated or unsaturated hydrocarbon groups (including linear and branched groups) such as alkyl groups and alkenyl groups, for example, those partially substituted with amino groups such as aminomethylcyclopropanol, and those partially substituted with halogen atoms. In addition, the alicyclic alcohol may be substituted with a substituent such as an amide group and a cyano group.

Representative preferred examples of the heterocyclic alcohol include monocyclic heterocyclic alcohols such as oxetaneol, oxetanemethanol, furfuryl alcohol, tetrahydrofurfuryl alcohol, tetrahydropyranmethanol, morpholineethanol, and pyridinemethanol; and polycyclic condensed heterocyclic alcohols such as benzofuranmethanol and dihydrobenzofuranmethanol.

The carbon number of the heterocyclic alcohol is preferably 3 or more, and the upper limit is preferably 24 or less, more preferably 18 or less, and even more preferably 12 or less.

The heterocyclic alcohol may be partially substituted in the same manner as the alicyclic alcohol described above.

Representative preferred examples of the aromatic alcohol include monocyclic aromatic alcohols such as benzyl alcohol, salicyl alcohol, benzenedimethanol, methoxyphenylmethanol, trimethoxyphenylmethanol, and phenethyl alcohol; polycyclic aromatic alcohols such as diphenylmethanol and triphenylmethanol; and condensed polycyclic aromatic alcohols such as naphthalenemethanol, anthracenemethanol, benzofuranmethanol, and dihydrobenzofuranmethanol.

The carbon number of the aromatic alcohol is preferably 7 or more, and the upper limit is preferably 24 or less, more preferably 20 or less, and even more preferably 16 or less.

The aromatic alcohol may be partially substituted in the same manner as the alicyclic alcohol described above.

The above examples are merely representative of preferred alcohol solvents, and the solvents that can be used in the production method of the present embodiment are not limited to the above examples.

The alcohol solvent may be any of a primary alcohol, a secondary alcohol, and a tertiary alcohol, and is preferably a primary alcohol. In addition, the alcohol solvent may be a monohydric alcohol having one hydroxy group or a polyhydric alcohol having two or more hydroxy groups, and is preferably a monohydric alcohol.

(Ether Solvent)

Examples of the ether solvent include aliphatic ethers, alicyclic ethers, heterocyclic ethers, and aromatic ethers. Considering ease of availability and cost, aliphatic ethers, alicyclic ethers, and aromatic ethers are preferred, aliphatic ethers and alicyclic ethers are more preferred, and alicyclic ethers are even more preferred.

Representative preferred examples of the aliphatic ether include, monoethers such as dimethyl ether, diethyl ether, diisopropyl ether, dibutyl ether, and tert-butyl methyl ether; diethers such as dimethoxymethane, dimethoxyethane, diethoxymethane, diethoxyethane; polyethers having three or more ether groups such as diethylene glycol dimethyl ether (diglyme) and triethylene oxide glycol dimethyl ether (triglyme); and ethers containing hydroxy groups such as diethylene glycol and triethylene glycol.

The carbon number of the aliphatic ether is preferably 2 or more, more preferably 3 or more, and still more preferably 4 or more, and the upper limit is preferably 10 or less, more preferably 8 or less, and still more preferably 6 or less.

In addition, the aliphatic alcohol may be linear or branched.

Representative preferred examples of alicyclic ethers include monocyclic alicyclic ethers such as ethylene oxide, propylene oxide, furan, tetrahydrofuran, pyran, tetrahydropyran, dimethoxytetrahydrofuran, cyclopentyl methyl ether, dioxane, dioxene, dioxin, and dioxolane; and polycyclic alicyclic ethers such as dicyclopentyl ether and dicyclohexyl ether.

Representative preferred examples of heterocyclic ethers include monocyclic heterocyclic ethers such as morpholine and hydroxymethyldimethoxypyridine; and polycyclic condensed heterocyclic ethers such as benzofuran, benzopyran, dibenzofuran, and methoxyindole.

The carbon number of the alicyclic ether and the heterocyclic ether is preferably 3 or more, and the upper limit is preferably 16 or less, more preferably 14 or less, and even more preferably 10 or less.

Representative preferred examples of aromatic ethers include monocyclic aromatic ethers such as methyl phenyl ether (anisole) and ethyl phenyl ether; polycyclic aromatic ethers such as dibenzyl ether, diphenyl ether, and benzyl phenyl ether; and condensed polycyclic aromatic ethers such as benzyl naphthyl ether and bisnaphthyl ether.

The carbon number of the aromatic ether is preferably 7 or more, and more preferably 8 or more, and the upper limit is preferably 16 or less, more preferably 14 or less, and still more preferably 12 or less.

The ether compound used in the present embodiment may be substituted with a substituent, such as a linear or branched hydrocarbon group such as an alkyl group and an alkenyl group, an alkoxyl group (the alkyl group may be linear or branched), a hydroxy group, an amino group, an amide group, and a cyano group, or a halogen atom.

Among the above ether compounds, alicyclic ethers are preferred, monocyclic alicyclic ethers are more preferred, and tetrahydrofuran is particularly more preferred, from the viewpoint of obtaining higher ionic conductivity.

(Nitrile Solvent)

Examples of nitrile solvents include aliphatic nitriles, alicyclic nitriles, heterocyclic nitriles, and aromatic nitriles, and in consideration of ease of availability and cost, aliphatic nitriles are preferred.

Representative preferred examples of the aliphatic nitrile include saturated or unsaturated aliphatic nitriles having one nitrile group, such as acetonitrile, acrylonitrile, methoxyacetonitrile, propionitrile, methoxypropionitrile, and butyronitrile; and saturated or unsaturated aliphatic nitriles having two or more nitrile groups, such as propanedinitrile, propanetricarbonitrile, butanedinitrile, butenedinitrile, butanetricarbonitrile, pentanedinitrile, pentanetricarbonitrile, hexanedinitrile, hexenedinitrile, hexanetricarbonitrile, and methylenepentanedinitrile.

The carbon number of the aliphatic nitrile is preferably 2 or more, and the upper limit is preferably 10 or less, more preferably 8 or less, and even more preferably 4 or less. Further, the carbon number of the aliphatic hydrocarbon group in the aliphatic nitrile is preferably 1 or more, and the upper limit is preferably 8 or less, more preferably 6 or less, even more preferably 2 or less.

In addition, the aliphatic hydrocarbon group in the aliphatic nitrile may be linear or branched.

Representative preferred examples of the alicyclic nitrile include monocyclic or polycyclic alicyclic nitriles having one nitrile group, such as cyanocyclopropane, cyclobutanecarbonitrile, hydroxycyclobutanecarbonitrile, oxocyclobutanecarbonitrile, cyclopentanecarbonitrile, furancarbonitrile, tetrahydropyrancarbonitrile, cyclohexanecarbonitrile, and bicyclobutanecarbonitrile; and alicyclic nitriles having two or more nitrile groups, such as furandicarbonitrile, cyclobutanedicarbonitrile, cyclopentanedicarbonitrile, cyclohexanedicarbonitrile, and cyclohexanetricarbonitrile.

Representative preferred examples of heterocyclic nitriles include monocyclic heterocyclic nitriles having one or two or more nitrile groups, such as morpholinecarbonitrile, tetrahydrofurfurylcarbonitrile, cyanopyridine, pyridinedicarbonitrile, pyridinetricarbonitrile, and furfurylmalononitrile; and polycyclic or polycyclic condensed heterocyclic nitriles having one or two or more nitrile groups, such as benzofurancarbonitrile, dibenzofurandicarbonitrile, and dicyanobipyridine.

The carbon number of the alicyclic nitrile and the heterocyclic nitrile is preferably 3 or more, and the upper limit is preferably 16 or less, more preferably 14 or less, and even more preferably 10 or less.

Representative preferred aromatic nitriles include monocyclic aromatic nitriles having one or two or more nitrile groups, such as phenylacetonitrile, cyanotoluene, benzonitrile, benzenedicarbonitrile, and benzenetricarbonitrile; and polycyclic or condensed polycyclic aromatic nitriles having one or two or more nitrile groups, such as biphenyldicarbonitrile, phenylcyclobutanecarbonitrile, naphthalenecarbonitrile, naphthalenedicarbonitrile, naphthalenetricarbonitrile, anthracenecarbonitrile, and cyclopentylbenzonitrile.

The carbon number of the aromatic nitrile is preferably 7 or more, more preferably 8 or more, and the upper limit is preferably 16 or less, more preferably 14 or less, and even more preferably 12 or less.

The ether compound used in the present embodiment may be substituted with a substituent, such as a linear or branched hydrocarbon group such as an alkyl group and an alkenyl group, an alkoxyl group (the alkyl group may be linear or branched), a hydroxy group, an amino group, an amide group, and a cyano group, or a halogen atom.

(Other Solvents Having Heteroatoms)

In addition, preferred examples also include amine solvents exemplified as solvents having heteroatoms other than the above alcohol solvents, ether solvents, and nitrile solvents, for example, aliphatic amines such as ethylenediamine, diaminopropane, dimethylethylenediamine, tetramethylethylenediamine (TMEDA), and tetramethyldiaminopropane (TMPDA); alicyclic amines such as cyclopropanediamine and cyclohexanediamine; heterocyclic aromatic amine solvents such as pyridine; and amide solvents such as dimethylformamide, dimethylacetamide, hexamethylphosphoramide, and N-methylpyrrolidone.

(Other Solvents)

In obtaining a solution containing an electrolyte precursor, when the above-mentioned heteroatom-containing solvent is used as the first solvent, a hydrocarbon solvent such as an aliphatic hydrocarbon solvent, an alicyclic hydrocarbon solvent, and an aromatic hydrocarbon solvent exemplified as the second solvent may be used as the other solvent other than the first solvent.

In this case, the smaller the amount of the other solvent used, the better. For example, it is preferably 50.0 parts by volume or less, more preferably 30.0 parts by volume or less, and even more preferably 15.0 parts by volume or less, relative to 100.0 parts by volume of the first solvent used. In addition, it is of course preferable to use only the above first solvent without using other solvents.

(Amount of First Solvent Used)

In the production method of the present embodiment, when an alcohol solvent is used as the first solvent, the amount of the alcohol solvent used is, relative to 1.0 mole of lithium sulfide used as a raw material, preferably 0.005 moles or more, more preferably 0.010 moles or more, even more preferably 0.015 moles or more, and still more preferably 0.020 moles or more, and the upper limit is preferably 20.0 moles or less, more preferably 16.0 moles or less, and even more preferably 10.0 moles or less.

In addition, when at least one organic solvent selected from an alcohol solvent, an ether solvent, and a nitrile solvent is used, and an alcohol solvent is used, the total amount of the ether solvent and the nitrile solvent used is preferably 2.0 parts by volume or more, more preferably 5.0 parts by volume or more, even more preferably 15.0 parts by volume or more, and still more preferably 50.0 parts by volume or more, and particularly preferably 150.0 parts by volume or more, relative to 1.0 part by volume of the alcohol solvent used, and the upper limit is preferably 10,000.0 parts by volume or less, more preferably 9,000.0 parts by volume or less, even more preferably 8,000.0 parts by volume or less, and still more preferably parts by volume or less.

(Mixing)

In the production method of the present embodiment, the raw material-containing substance containing raw materials is mixed in the above first solvent. By mixing the raw material-containing substance in the first solvent, a solution containing an electrolyte precursor is obtained. In the embodiment (i), since the electrolyte precursor (polysulfide) is generated via sulfur radicals, a sulfide solid electrolyte with few impurities and high ionic conductivity can be efficiently obtained.

There is no particular restriction on the method of mixing the raw material-containing substance in the first solvent, and it is only necessary to charge and mix the first solvent and the raw material-containing substance in a device capable of mixing a raw material-containing substance in the first solvent. For example, it is preferable to gradually add the raw material-containing substance after supplying the first solvent into a tank and operating stirring blades. In addition, it is also preferable to gradually add the first solvent after supplying the raw material-containing substance into the tank and operating the stirring blades. Since a good mixed state of the raw material-containing substance is obtained, the dispersion of the raw materials is improved, and the generation of the sulfur radicals and the formation of the electrolyte precursor (polysulfide) are promoted.

However, when using a halogen simple substance as a raw material, the raw material may not be solid, specifically, at room temperature and normal pressure, fluorine and chlorine are gases, and bromine is liquid. In such cases, for example, when the raw material is a liquid, it may be supplied with the solvent into the tank separately from other solid raw materials, and when the raw material is a gas, it may be supplied by blowing into the solvent to which the solid raw material has been added.

There is no particular restriction on the order in which the raw materials of the raw material-containing substance are charged and mixed. Considering the work efficiency, it is preferable use collective mixing, that is, to charge and mix all the raw materials at the same time.

In addition, in order to improve the solubility of the raw materials, suppress the generation of impurities, and more efficiently obtain a sulfide solid electrolyte having high ionic conductivity, it is preferable to use split mixing, that is, to divide the raw materials into two raw material groups, raw material groups 1 and 2, and mixing the raw material group 1 and then mixing the raw material group 2.

In the case of performing split mixing, it is preferable that the raw material group 1 contains elemental sulfur. This promotes the formation of sulfur radicals, and a sulfide solid electrolyte having a high ionic conductivity can be obtained more efficiently.

From the same viewpoint, a combination of the raw material group 1 including a raw material containing at least one atom selected from a lithium atom, a phosphorus atom, and a sulfur atom, elemental sulfur, and lithium sulfide, and the raw material group 2 including a raw material containing a halogen atom, is preferred. This is because the raw material group 1 contains elemental sulfur and lithium sulfide, and the reaction therebetween promotes the formation of sulfur radicals via lithium polysulfides. In addition, from the same viewpoint, a combination of the raw material group 1 including a raw material containing a halogen atom, elemental sulfur, and lithium sulfide, and the raw material group 2 including a raw material containing a phosphorus atom and a sulfur atom, is preferred.

In the production method of the present embodiment, the order in which the raw materials are charged and mixed may be selected depending on whether the work efficiency is regarded as important or the ionic conductivity of the sulfide solid electrolyte is regarded as important.

Also, as described above, in the production method of the present embodiment, $Li_3PS_4$ containing the $PS_4$ structure can be prepared by producing it first, etc., and used as a raw material contained in the raw material-containing substance. $Li_3PS_4$ can be produced by blending lithium sulfide and diphosphorus pentasulfide in a molar ratio of 75:25, for example. In the production method of the present embodiment, when lithium sulfide and diphosphorus pentasulfide are used as raw materials, it is also possible to mix, as the raw material group 1, a raw material group containing lithium sulfide and diphosphorus pentasulfide in a predetermined molar ratio such as 75:25 and containing elemental sulfur in a solvent, and then to add and mix, as the raw material group 2, a raw material group including a raw material containing a halogen atom such as lithium halide, and other remaining raw materials required for the production of the desired sulfide solid electrolyte, such as the remaining of lithium sulfide. By forming an electrolyte precursor (polysulfide) containing the basic structure of $Li_3PS_4$ in advance, a sulfide solid electrolyte can be obtained more efficiently.

Here, the predetermined molar ratio of lithium sulfide to diphosphorus pentasulfide is preferably 55 to 85 : 15 to 45, more preferably 60 to 80 : 20 to 40, and even more preferably 65 to 75 : 25 to 35.

The production method of the present embodiment is characterized in that the raw material-containing substance is mixed in the first solvent. In other words, since it is sufficient to mix the raw material-containing substance and does not require pulverization, it can also be produced by a method which does not use equipment that is generally called as a grinder such as media type grinders including ball mill and a bead mill, and used for the purpose of pulverizing raw materials. In the production method of the present embodiment, the raw material-containing substance is simply mixed in the solvent, and the solvent and the raw materials are mixed to generate polysulfide, which is an electrolyte precursor. When the polysulfide is decomposed by heating or the like, an amorphous sulfide solid electrolyte, and even a crystalline sulfide solid electrolyte, can be formed.

In order to shorten the mixing time for obtaining the electrolyte precursor or to pulverize the raw materials, the mixture of raw materials in the solvent may be pulverized by a pulverizer; however, as mentioned above, it is preferable not to use a pulverizer.

Examples of the devices for mixing the raw material-containing substance in the first solvent include a mechanical stirring type mixer equipped with stirring blades in a tank. Examples of the mechanical stirring type mixer include high-speed stirring type mixers and double-arm mixers, and high-speed stirring type mixers are preferably used from the viewpoint of increasing the uniformity of the raw material in the mixture of the raw material-containing substance and obtaining higher ionic conductivity. Further, examples of the high-speed stirring type mixer include a vertical axis rotation type mixer and a horizontal axis rotation type mixer, and either type of mixer may be used.

Examples of the shape of the stirring blade used in the mechanical stirring type mixer include an anchor type, a blade type, an arm type, a ribbon type, a multi-stage blade type, a double-arm type, a shovel type, a twin-screw blade type, a flat blade type, and a C-blade type. From the viewpoint of improving the uniformity of the raw material and obtaining higher ionic conductivity, a shovel type, a flat blade type, a C-blade type, and the likes are preferred. Further, in a mechanical stirring type mixer, it is preferable to install a circulation line for discharging an object to be stirred outside the mixer and returning it to the inside of the mixer. By doing so, raw materials with heavy specific gravity such as lithium halide are stirred without settling or stagnation, and it becomes possible to mix more uniformly.

The location of the circulation line to be installed is not particularly limited, however it is preferably installed at a location such that the object to be stirred is discharged from the bottom of the mixer and returned to the top of the mixer. This makes it easier to uniformly stir the raw material, which easily settles, on the convection caused by circulation. Furthermore, it is preferable that the return port is located below the surface of the liquid of the object to be stirred. By doing so, it is possible to suppress the liquid to be stirred from splashing and adhering to the wall surface inside the mixer.

Although the upper limit of the mixing time when mixing the raw material-containing substance in the first solvent is not particularly limited, considering the efficiency, it is preferably 240 minute or less, more preferably 60 minutes or less, even more preferably 30 minutes or less, and still more preferably 15 minutes or less, and the lower limit thereof is usually 0.1 minutes or more, preferably 1 minute or more, and more preferably 3 minutes or more.

In addition, the temperature conditions for mixing the raw material-containing substance in the solvent are not particularly limited, and are, for example, -30 to 100°C, preferably -10 to 50°C, and more preferably around room temperature (20°C) (for example, approximately room temperature + 5°C).

[Obtaining Electrolyte Precursor]

The production method of the present embodiment includes removing the first solvent from the solution obtained by obtaining the above-mentioned solution containing an electrolyte precursor, to obtain the electrolyte precursor. In the production method of the present embodiment, a solution containing the electrolyte precursor is obtained, and therefore it is necessary to remove the solvent from the solution to obtain a powder of the electrolyte precursor. This is because the electrolyte precursor dissolved in the solution cannot be brought into contact with the second solvent.

Although there is no particular limitation on the method for removing the solvent from the solution containing the electrolyte precursor, examples thereof include a method by drying.

As for the drying conditions, although the drying temperature cannot be generalized because it varies depending on the pressure conditions under which the drying is performed, and the boiling point of the first solvent, it is usually 5°C or higher and lower than 200°C, preferably 20°C to 190°C, more preferably 35°C to 175°C, and even more preferably 50°C to 160°C. As for the pressure conditions, normal pressure or pressurization is acceptable, but reduced pressure drying (vacuum drying) using a vacuum pump or the like is preferable.

The drying time is usually 1 minute to 10 hours, preferably 10 minutes to 8 hours, more preferably 30 minutes to 6 hours, and even more preferably 1 hour to 5 hours.

In this way, a powder of the electrolyte precursor that dissolves in the solution containing the electrolyte precursor is obtained by a method such as drying. By obtaining the electrolyte precursor, the electrolyte precursor can be brought into contact with the second solvent by making the electrolyte precursor into a powder.

In the embodiment (i), obtaining the electrolyte precursor may be performed by the same operation as the "first heating" in "heating" to be described later, or may be performed separately in a "first heating-1" and a "first heating-2". The heating temperature in the "first heating" is 20°C or higher and lower than 150°C as described later, and is substantially within the range of the drying temperature in the above-mentioned "method by drying". Therefore, under the temperature conditions of the "first heating" described later, granulation due to heating caused by residual solvent is unlikely to occur even when the drying temperature conditions are taken into consideration. The same operation as the above-mentioned "first heating" in obtaining the electrolyte precursor may be performed on a solution containing the electrolyte precursor, that is, on a solution containing the electrolyte precursor and the first solvent, and it is not necessary to replace the first solvent with the second solvent.

The electrolyte precursor is obtained by the same operation as the "first heating" described later, and the heating after contacting the electrolyte precursor with the second solvent may be performed by the methods of "first heating" and "second heating", or by the "second heating" while omitting the "first heating". Here, when the "first heating" is performed, it may be divided into a "first heating-1" and a "first heating-2". In any case, by obtaining the electrolyte precursor by the same operation as the "first heating", granulation is unlikely to occur as described above, so that the particle diameter and particle size distribution can be made smaller, and an increase of particle diameter and a change in particle size distribution can be further suppressed.

Although details of obtaining the electrolyte precursor in the embodiment (ii) will be described later, obtaining the electrolyte precursor may be performed by the same operation as the "first heating" in the "heating" of the embodiment (i), or may be performed separately in the "first heating-1" and the "first heating-2".

[Heating]

The production method of the present embodiment includes removing the solvent from the solution containing the electrolyte precursor to obtain the electrolyte precursor, contacting the electrolyte precursor with the second solvent, and then heating the mixture.

The heating temperature is not particularly limited as long as it is at room temperature or higher, and although room temperature is variable and cannot be generalized, it is usually preferably 20°C or higher, and the upper limit is preferably 500°C or lower. When the heating temperature is within the above range, the decomposition of the polysulfide, the removal of the solvent, and the removal of elemental sulfur can be performed more efficiently, and crystallization can be performed.

In the embodiment (i), by heating, it is possible to form a sulfide solid electrolyte by decomposing the generated polysulfide (i.e., electrolyte precursor), remove elemental sulfur generated by decomposition of the polysulfide, remove the solvent, and crystallize. The heating temperature in the embodiment (i) is preferably within the above-mentioned heating temperature range, i.e., 20°C or higher and 500°C or lower.

It is preferable to perform the heating in the embodiment (i) in multiple stages. For example, it is preferable to perform heating (first heating) mainly for decomposing the polysulfide produced, removing the solvent, and removing elemental sulfur, and then perform heating (second heating) for crystallization. More specifically, it is preferable to perform the first heating at a heating temperature of 20°C or higher and lower than 150°C, and the second heating at a heating temperature of 150°C or higher and 500°C or lower.

The heating temperature in the first heating may be 20°C or higher and lower than 150°C. For example, heating at a lower temperature may be followed by heating at a higher temperature, i.e., the first heating may be performed by further heating in multiple stages.

Typically, the removal of the solvent begins at 20°C or higher, the decomposition of the polysulfide begins at 60°C or higher, and the removal of sulfur begins at 100°C or higher. By carrying out multi-stage heating at heating temperatures according to these purposes, each purpose can be achieved more efficiently, and thus it becomes easier to obtain a sulfide solid electrolyte with improved ionic conductivity. In particular, by ensuring the removal of elemental sulfur, the generation of impurities due to remaining elemental sulfur can be further suppressed, making it easier to obtain a sulfide solid electrolyte with improved ionic conductivity.

For example, when heating at a lower temperature (first heating-1), the heating temperature is preferably 20°C or higher, with an upper limit of preferably lower than 60°C, and more preferably 50°C or lower. By setting the heating temperature in the temperature range, it becomes possible to remove the solvent.

Subsequently, when heating at a higher temperature (first heating-2), the heating temperature is preferably 60°C or higher, more preferably 65°C or higher, even more preferably 75°C or higher, still more preferably 95°C or higher, and particularly preferably 110°C or higher, and the upper limit is 150°C or lower, more preferably 145°C or lower, even more preferably 135°C or lower, and still more preferably 130°C or lower. By setting the heating temperature in the temperature range, it becomes possible to mainly perform the decomposition of the polysulfide and the removal of sulfur.

As described above, the first heating can be performed to remove the solvent, decompose the polysulfide, or remove sulfur depending on the heating temperature, and thus various modes can be taken by adjusting the heating temperature. For example, when the heating temperature of the first heating is 60°C or higher (lower than 100°C), it is possible to remove the solvent and even decompose the polysulfide, and thus this is called first heating-1, and by heating at 100°C or higher (lower than 150°C) as first heating-2, it is possible to remove the sulfur. In this case, the first heating-2 is not performed, and the sulfur can be removed by a method other than heating, such as solvent washing and hydrodesulfurization, and then the second heating can be performed. Methods for removing sulfur, such as solvent washing and hydrodesulfurization, will be described later.

Also, for example, when the heating temperature of the first heating is 20°C or higher (lower than 60°C), the solvent can be removed, so this is called first heating-1, and when heating at 60°C or higher (lower than 100°C) as first heating-2, the polysulfide can be decomposed, and then heating is performed at 100°C or higher (lower than 150°C) as first heating-3 to remove the sulfur. In this way, it is also possible to perform three-stage heating. In this case, instead of the first heating-3, sulfur can be removed by a method other than heating as described above, and by setting the heating temperature of the first heating-2 to 100°C or higher (lower than 150°C), decomposition of the polysulfide and removal of sulfur can be performed simultaneously.

As described above, the first heating is performed by multi-stage heating; however, when the heating temperature of the first heating is, for example, 100°C or higher, the solvent can be removed, the polysulfide can be decomposed, and sulfur can be removed, and thus multi-stage heating is not necessary.

The heating time of the first heating is not particularly limited as long as it is at least long enough to remove the solvent; however, for example, it is preferably 10 minute or more, more preferably 30 minutes or more, even more preferably 45 minutes or more, and further more preferably 1 hour or more. Further, the upper limit of the heating time is not particularly limited, however it is preferably 24 hours or less, more preferably 10 hours or less, even more preferably 5 hours or less, and further more preferably 3 hours or less.

As for the pressure conditions during the first heating, it is preferable to be under normal pressure or reduced pressure, and in the case of reduced pressure, specifically, it is preferably 85 kPa or less, more preferably 80 kPa or less, and even more preferably 70 kPa or less. The lower limit may be a vacuum (0 kPa), and considering ease of pressure adjustment, it is preferably 1 kPa or more, more preferably 2 kPa or more, and even more preferably 3 kPa or more.

Moreover, heating is preferably performed in an inert gas atmosphere (for example, a nitrogen atmosphere or an argon atmosphere) or a reduced pressure atmosphere (in particular, a vacuum). For example, an inert gas atmosphere containing a certain concentration of hydrogen may be used. This is because deterioration (for example, oxidation) of the sulfide solid electrolyte can be prevented.

As described above, "obtaining an electrolyte precursor" can be performed by the same operation as the above-mentioned "first heating". In this case, the "first heating" may be omitted or may be performed; however, it is preferable to perform the "first heating" in consideration that each purpose can be achieved more efficiently by performing multi-stage heating at heating temperatures according to the purpose.

Although the heating temperature in the second heating may vary depending on the sulfide solid electrolyte to be produced and cannot be generalized, considering the relationship with the first heating, the heating temperature may be 150°C or higher and 500°C or lower, preferably 160°C or higher, more preferably 200°C or higher, and even more preferably 240°C or higher, with the upper limit being preferably 480°C or lower, more preferably 460°C or lower, and even more preferably 440°C or lower.

The second heating may be performed in multiple stages, similar to the first heating. By carrying out multi-stage heating as the second heating, more reliable crystallization can be achieved.

When multi-stage heating is performed, for example, the heating temperature when heating at a lower heating temperature (second heating-1) may be set to 150°C or higher and lower than 270°C, and the heating temperature when heating at a higher heating temperature (second heating-2) may be set to 270°C or higher and 500°C or lower. The lower limit of the second heating-1 is preferably the lower limit of the temperature of the second heating, and the upper limit is preferably 265°C or lower, and more preferably 255°C or lower. In addition, the upper limit of the second heating-2 is preferably the upper limit of the temperature of the second heating, and the lower limit is preferably 290°C or higher, more preferably 340°C or higher, and even more preferably 375°C or higher.

The heating time and pressure conditions in the second heating are the same as those in the first heating. It is also preferable to perform the second heating in an inert gas atmosphere.

The heating method is not particularly limited; however, examples thereof include methods using various heating devices, such as a hot plate, a vacuum heating device, an argon gas atmosphere furnace, a firing furnace, and a vacuum firing furnace. Further, industrially, a horizontal dryer, a horizontal vibrating fluidized dryer, etc. having a heating unit and a feed mechanism may be used, and they may be selected depending on the processing amount to be heated.

(Removal of Sulfur)

In the embodiment (i), elemental sulfur is used as the raw material, and the electrolyte precursor is a polysulfide, so that the sulfur can be removed by heating as described above. However, there are cases where excess sulfur remains. In this case, the sulfur may be removed by a method other than heating. For example, when the first heating is performed at a temperature of lower than 100°C, it is preferable to remove sulfur by a method other than heating. Examples of methods for removing sulfur include solvent removal and hydrodesulfurization.

The solvent washing method is a method of washing the powder that has been subjected to the first heating with a solvent that dissolves sulfur, for example, an aromatic hydrocarbon solvent such as benzene, toluene, and xylene; or a sulfur-containing organic solvent such as carbon disulfide, and removing the sulfur.

In addition, contacting the electrolyte precursor with the second solvent in the production method of the present embodiment can also be considered as a form of solvent washing. Therefore, by contacting before heating, in addition to removing the solvent attached to the electrolyte precursor, sulfur can also be removed. Therefore, it is not necessary to remove sulfur again, and as already described, sulfur may be removed when it is desired to remove the solvent more reliably, for example, when the temperature of the first heating is set to lower than 100°C.

The method of removing sulfur by solvent washing is a method of washing the powder that has been subjected to the first heating with a solvent that dissolves sulfur, for example, an aromatic hydrocarbon solvent such as benzene, toluene, and xylene; or a sulfur-containing organic solvent such as carbon disulfide, and removing the sulfur.

The hydrodesulfurization method is a method of mixing the powder that has been subjected to the first heating with a hydrodesulfurization catalyst, and passing hydrogen through the mixture while heating at 300 to 450°C to remove sulfur through a hydrodesulfurization reaction. Here, preferred examples of hydrodesulfurization catalysts include porous catalysts containing nickel, molybdenum, cobalt, tungsten, etc. as an active metal element, such as NiMo catalysts, CoMo catalysts, and NiW catalysts.

(Amorphous Sulfide Solid Electrolyte)

In the embodiment (i) of the production method of the present embodiment, an amorphous sulfide solid electrolyte is produced by carrying out the first heating for mainly removing the solvent described above.

The amorphous sulfide solid electrolyte produced in the production method of the present embodiment contains lithium atoms, sulfur atoms, phosphorus atoms, and halogen atoms, and representative examples thereof preferably include solid electrolytes composed of lithium sulfide, phosphorus sulfide, and a lithium halide, for example, $Li_2S\text{-}P_2S_5\text{-}LiI$, $Li_2S\text{-}P_2S_5\text{-}LiCl$, $Li_2S\text{-}P_2S_5\text{-}LiBr$, and $Li_2S\text{-}P_2S_5\text{-}LiI\text{-}LiBr$; and solid electrolytes containing other atoms such as oxygen atoms and silicon atoms, for example, $Li_2S\text{-}P_2S_5\text{-}Li_2O\text{-}LiI$ and $Li_2S\text{-}SiS_2\text{-}P_2S_5\text{-}LiI$. From the viewpoint of obtaining higher ionic conductivity, solid electrolytes composed of lithium sulfide, phosphorus sulfide, and a lithium halide, such as $Li_2S\text{-}P_2S_5\text{-}LiI$, $Li_2S\text{-}P_2S_5\text{-}LiCl$, $Li_2S\text{-}P_2S_5\text{-}LiBr$, and $Li_2S\text{-}P_2S_5\text{-}LiI\text{-}LiBr$, are preferred.

The types of atoms constituting the sulfide solid electrolyte can be determined by, for example, an ICP emission spectrophotometer.

In the sulfide solid electrolyte (amorphous sulfide solid electrolyte and crystalline sulfide solid electrolyte) obtained by the production method of the present embodiment, the composition ratio (molar ratio) of lithium atoms, phosphorus atoms, sulfur atoms, and halogen atoms is preferably 1.0 to 1.8 : 0.1 to 0.8 : 1.0 to 2.0 : 0.01 to 0.6, more preferably 1.1 to 1.7 : 0.2 to 0.6 : 1.2 to 1.8 : 0.05 to 0.5, and still more preferably 1.2 to 1.6 : 0.25 to 0.5 : 1.3 to 1.7 : 0.08 to 0.4. Further, when bromine and iodine, or bromine and chlorine are used in combination as halogen atoms, the composition ratio (molar ratio) of lithium atoms, phosphorus atoms, sulfur atoms, bromine, and iodine (or chlorine) is preferably 1.0 to 1.8 : 0.1 to 0.8 : 1.0 to 2. 0 : 0.01 to 0.3 : 0.01 to 0.3, more preferably 1.1 to 1.7 : 0.2 to 0.6 : 1.2 to 1.8 : 0.02 to 0.25 : 0.02 to 0.25, still more preferably 1.2 to 1.6 : 0.25 to 0.5 : 1.3 to 1.7 : 0.03 to 0.2 : 0.03 to 0.2, and yet still more preferably 1.35 to 1.45 : 0.3 to 0.45 : 1.4 to 1.7 : 0.04 to 0.18 : 0.04 to 0.18.

By setting the composition ratio (molar ratio) of lithium atoms, sulfur atoms, phosphorus atoms, and halogen atoms within the above range, it becomes easier to obtain a solid electrolyte with higher ionic conductivity and a crystal structure to be described later, particularly a thio-LISICON Region II type crystal structure or an argyrodite type crystal structure.

The shape of the amorphous sulfide solid electrolyte is not particularly limited, and examples thereof include a particle shape.

The average particle diameter ($D_{50}$) of the particle shaped amorphous sulfide solid electrolyte is, for example, $0.01\ \mu m$ or more, further $0.03\ \mu m$ or more, $0.05\ \mu m$ or more, $0.1\ \mu m$ or more, and the upper limit is $200.0\ \mu m$ or less, further $100.0\ \mu m$ or less, $90.0\ \mu m$ or less, $80.0\ \mu m$ or less, and $70.0\ \mu m$ or less.

(Crystalline Sulfide Solid Electrolyte)

The crystalline sulfide solid electrolyte obtained by the production method of the present embodiment may be a so-called glass ceramic obtained by heating an amorphous sulfide solid electrolyte to a crystallization temperature or higher, and preferable examples of a crystal structure thereof include a $Li_3PS_4$ crystal structure, a $Li_4P_2S_6$ crystal structure, a $Li_7PS_6$ crystal structure, a $Li_7P_3S_{11}$ crystal structure, and a crystal structure having peaks in the vicinity of $20 = 20.2°$ and in the vicinity of $23.6°$ (for example, JP 2013-16423 A).

Preferable examples also include a $Li_{4-x}Ge_{1-x}P_xS_4$ system thio-LISICON Region II type crystal structure (see Kanno et al., Journal of The Electrochemical Society, 148 (7) A742-746 (2001)), and a crystal structure similar to the $Li_{4-x}Ge_{1-x}P_xS_4$ system thio-LISICON Region II type (see Solid State Ionics, 177 (2006), 2721-2725).

The crystal structure of the crystalline sulfide solid electrolyte obtained by the production method of the present embodiment is preferably the thio-LISICON Region II type crystal structure among above, from the viewpoint of obtaining higher ionic conductivity. Herein, the term "thio-LISICON Region II type crystal structure" refers to either a $Li_{4-x}Ge_{1-x}P_xS_4$ system thio-LISICON Region II type crystal structure or a crystal structure similar to a $Li_{4-x}Ge_{1-x}P_xS_4$ system thio-LISICON Region II type crystal structure.

The crystalline sulfide solid electrolyte obtained by the production method of the present embodiment may contain the thio-LISICON Region II type crystal structure, or may contain the thio-LISICON Region II type crystal structure as a main crystal; however, from the viewpoint of obtaining higher ionic conductivity, it is preferable that the crystalline sulfide solid electrolyte contains the thio-LISICON Region II type crystal structure as a main crystal. In the description herein, "containing as a main crystal" means that the proportion of the target crystal structure in the crystal structures is 80% or more, and the proportion is preferably 90% or more, and more preferably 95% or more. In addition, from the viewpoint of obtaining higher ionic conductivity, it is preferable that the crystalline sulfide solid electrolyte obtained by the production method of the present embodiment does not contain crystalline $Li_3PS_4$ ($\beta\text{-}Li_3PS_4$).

In the X-ray diffractometry using $CuK\alpha$ line, the diffracted peak of the $Li_3PS_4$ crystal structure appears, for example, in the vicinity of $20 = 17.5°$, $18.3°$, $26.1°$, $27.3°$, and $30.0°$, the diffracted peak of the $Li_4P_2S_6$ crystal structure appears, for example, in the vicinity of $2\theta = 16.9°$, $27.1°$, and $32.5°$, the diffraction peak of the $Li_7PS_6$ crystal structure

appears, for example, in the vicinity of $2\theta = 15.3°$, $25.2°$, $29.6°$, and $31.0°$, the diffraction peak of the $Li_7P_3S_{11}$ crystal structure appears, for example, in the vicinity of $2\theta = 17.8°$, $18.5°$, $19.7°$, $21.8°$, $23.7°$, $25.9°$, $29.6°$, and $30.0°$, the diffraction peak of the $Li_{4-x}Ge_{1-x}P_xS_4$ system thio-LISICON Region II type crystal structure appears, for example, in the vicinity of $2\theta = 20.1°$, $23.9°$, and $29.5°$, and the diffraction peak of the crystal structure similar to the $Li_{4-x}Ge_{1-x}P_xS_4$ system thio-LISICON Region II type appears, for example, in the vicinity of $2\theta = 20.2°$ and $23.6°$. Note that these peak positions may be shifted back and forth within a range of $\pm 0.5°$.

A crystalline sulfide solid electrolyte having the argyrodite type crystal structure having the structural skeleton of the above-described $Li_7PS_6$, in which a part of P is substituted with Si, is also preferred.

Examples of the compositional formulas of the argyrodite type crystal structure include crystal structures represented by the compositional formulas $Li_{7-x}P_{1-y}Si_yS_6$ and $Li_{7+x}P_{1-y}Si_yS_6$ (x is -0.6 to 0.6, and y is 0.1 to 0.6). The argyrodite type crystal structure represented by this compositional formula is a cubic or orthorhombic, preferably a cubic crystal, and has peaks mainly appearing at positions of $2\theta = 15.5°$, $18.0°$, $25.0°$, $30.0°$, $31.4°$, $45.3°$, $47.0°$, and $52.0°$ in X-ray diffractometry using CuKα line.

Examples of the compositional formula of argyrodite type crystal structure include a compositional formula of $Li_{7-x-2y}PS_{6-x-y}Cl_x$ ($0.8 \le x \le 1.7$, $0 < y \le -0.25x + 0.5$). The argyrodite type crystal structure represented by this compositional formula is preferably a cubic crystal, and has peaks mainly appearing at positions of $2\theta = 15.5°$, $18.0°$, $25.0°$, $30.0°$, $31.4°$, $45.3°$, $47.0°$, and $52.0°$ in X-ray diffractometry using CuKα line.

Further, examples of the compositional formula of the argyrodite type crystal structure include a compositional formula of $Li_{7-x}PS_{6-x}Ha_x$ (Ha is Cl or Br, x is preferably 0.2 to 1.8). The argyrodite type crystal structure represented by this compositional formula is preferably a cubic crystal, and has peaks mainly appearing at positions of $2\theta = 15.5°$, $18.0°$, $25.0°$, $30.0°$, $31.4°$, $45.3°$, $47.0°$, and $52.0°$ in X-ray diffractometry using CuKα line.

Note that these peak positions may be shifted back and forth within a range of $\pm 0.5°$.

As the crystalline sulfide solid electrolyte obtained by the production method of the present embodiment, among the above, a crystalline sulfide solid electrolyte having a thio-LISICON Region II type crystal structure and a crystalline sulfide solid electrolyte having an argyrodite type crystal structure are preferable.

The shape of the crystalline sulfide solid electrolyte is not particularly limited, and examples thereof include a particle shape.

The average particle diameter ($D_{50}$) of the particle shaped crystalline sulfide solid electrolyte is, for example, 0.01 μm or more, further 0.03 μm or more, 0.05 μm or more, 0.1 μm or more, and the upper limit is 200.0 μm or less, further 100.0 μm or less, 90.0 μm or less, 80.0 μm or less, and 70.0 μm or less.

[Embodiment (ii)]

In the case of the embodiment (ii), the raw material-containing substance contains a plurality of raw materials each containing at least one atom selected from a lithium atom, a phosphorus atom, a sulfur atom, and a halogen atom, and contains lithium sulfide, phosphorus sulfide, and at least one halogen atom-containing raw material selected from lithium halide and elemental halogen.

[Obtaining a solution containing an electrolyte precursor]

The raw material-containing substance will be described with respect to obtaining a solvent containing an electrolyte precursor in the embodiment (ii).

(Raw Material-Containing Substance)

The raw material-containing substance employed in the embodiment (ii) contains a plurality of raw materials each containing at least one atom selected from a lithium atom, a phosphorus atom, a sulfur atom, and a halogen atom, and contains lithium sulfide, phosphorus sulfide, and at least one halogen atom-containing raw material selected from lithium halide and elemental halogen. In addition, the raw material-containing substance employed in the embodiment (ii) preferably does not contain elemental sulfur. Thus, the raw materials used in the embodiments (i) and (ii) are different.

The raw material-containing substance employed in the embodiment (ii) differs from the raw material-containing substance of the embodiment (i) in that it contains phosphorus sulfide, lithium halide, and elemental halogen as raw materials; however, for raw materials other than these raw materials, the raw materials exemplified as the raw material-containing substance of the embodiment (i) above can be used.

The blending ratio of the raw materials in the embodiment (ii) can be the same as the blending ratio of the raw materials described in the embodiment (i). For example, in the above embodiment (i), when lithium sulfide, elemental sulfur, diphosphorus pentasulfide, and lithium halide are used, the ratio of lithium sulfide to the total of lithium sulfide and diphosphorus pentasulfide is such that elemental sulfur is contained, but it can also be applied to the embodiment (ii) which preferably does not contain elemental sulfur. By adopting such a blending ratio, it becomes easier to obtain the thio-LISICON Region II type crystal structure and the argyrodite type crystal structure, which are the preferred crystal structures of the sulfide solid electrolyte obtained by the production method of the present embodiment.

(First Solvent)

As in the above embodiment (i), in the embodiment (ii), the first solvent used when mixing the raw materials may be a solvent different from the second solvent in relation to the second solvent, and a hydrocarbon solvent other than the hydrocarbon solvent used as the second solvent may be used, and it is also preferable to use a solvent containing a heteroatom.

In the embodiment (ii), among the solvents containing a heteroatom, an alcohol solvent and an ether solvent are preferred. The alcohol solvent and the ether solvent may be used alone or in combination of a plurality of kinds thereof, and it is particularly preferable to use the alcohol solvent and the ether solvent. Examples of these solvents include the same solvents as those described in the above embodiment (i).

(Solvent 1-1 and Solvent 1-2)

In the embodiment (ii), the first solvent used when mixing the raw materials is preferably used in such a manner that the raw material-containing substance is mixed in an ether solvent (solvent 1-1), and then an alcohol solvent (solvent 1-2) is added and mixed. When the first solvent contains a mixed solvent containing a plurality of solvents, by using the solvent 1-1 and the solvent 1-2 separately, it is possible to suppress the separation and loss of various raw materials such as lithium sulfide, phosphorus sulfide, and lithium halide, which are preferably used as raw materials.

When the first solvent contains an alcohol solvent and an ether solvent, the solvent 1-1 is preferably an ether solvent, and the solvent 1-2 is preferably an alcohol solvent.

As the solvent 1-1, in addition to the ether solvent, an ester solvent and an amine solvent are also preferably used among solvents containing heteroatoms such as oxygen atoms and nitrogen atoms. Of these, an ether solvent is preferred. In addition, among ether solvents, alicyclic ethers are preferred, and tetrahydrofuran is particularly preferred.

The amount of the solvent 1-1 used is preferably 100 mL or more, more preferably 200 mL or more, even more preferably 350 mL or more, and still more preferably 450 mL or more, and the upper limit is preferably 1000 mL or less, more preferably 850 mL or less, even more preferably 700 mL or less, and still more preferably 550 mL or less, relative to 100 g of the raw material-containing substance.

The 1-2 solvent is preferably an alcohol solvent. In this case, an aliphatic alcohol is preferred, a primary aliphatic alcohol is more preferred, methanol and ethanol are even more preferred, and ethanol is particularly preferred.

The amount of the solvent 1-2 used is preferably 200 mL or more, more preferably 400 mL or more, even more preferably 700 mL or more, and still more preferably 900 mL or more, and the upper limit is preferably 3000 mL or less, more preferably 2000 mL or less, even more preferably 1700 mL or less, and still more preferably 1500 mL or less, relative to 100 g of the raw material-containing substance.

As in the embodiment (i), in the embpdiment (ii), a hydrocarbon solvent such as an aliphatic hydrocarbon solvent, an alicyclic hydrocarbon solvent, and an aromatic hydrocarbon solvent exemplified as the second solvent may be used as the other solvent in addition to the first solvent.

(Mixing)

In the embodiment (ii), the mixing of the raw material-containing substance in the first solvent can be performed in the same manner as the mixing in the embodiment (i).

As described above, in the case where the first solvent is used separately as the solvent 1-1 and the solvent 1-2, when the raw material-containing substance is mixed in the solvent 1-1, as described above, a mixture is obtained and the raw material-containing substance is not completely dissolved. In the mixture, the raw materials contained in the raw material-containing substance are held in a bonded state between the raw materials and with the solvent, and then by adding and mixing the solvent 1-2, the raw materials dissolve while maintaining a loose bond with the solvent 1-1, and a solution containing an electrolyte precursor is obtained.

When the solvent 1-1 and the solvent 1-2 are used separately, the mixing conditions of the raw material-containing substance in the solvent 1-1, such as temperature conditions, are not particularly limited, and are, for example, usually -10 to 100°C, preferably 0 to 80°C, more preferably 10 to 70°C, and even more preferably 20 to 60°C. The mixing time is usually 0.1 to 500 hours, and from the viewpoint of preparing the reaction product more efficiently and in a larger amount, it is preferably 1 to 400 hours, more preferably 3 to 300 hours, still more preferably 5 to 200 hours, and even more preferably 10 to 100 hours.

As the mixing conditions when adding and mixing the solvent 1-2, the temperature condition is not particularly limited, and is, for example, usually -10 to 100°C, preferably 0 to 80°C, more preferably 10 to 70°C, and still more preferably 20 to 60°C. The mixing time is usually 1 minute to 100 hours, and from the viewpoint of preparing the solid electrolyte precursor more efficiently and in a larger amount, it is preferably 3 minutes to 80 hours, more preferably 5 minutes to 50 hours, still more preferably 10 minutes to 10 hours, and even more preferably 20 minutes to 1 hour.

[Obtaining Electrolyte Precursor]

In the embodiment (ii), after obtaining a solution containing an electrolyte precursor by the above mixing, the solvent is removed from the solution to obtain the electrolyte precursor. As in the embodiment (i) above, the solvent may be removed from the solution to obtain the electrolyte precursor, for example, by a method of drying.

In addition, as in the embodiment (i) above, "obtaining an electrolyte precursor" in the embodiment (ii) may be performed by the same operation as the "first heating" in the "heating" of the embodiment (i), or may be performed separately in the "first heating-1" and the "first heating-2".

[Heat treatment while supplying hydrogen sulfide]

In the embodiment (ii), it is preferable to include heat treating the electrolyte precursor while supplying hydrogen sulfide before heating. Heat treating the electrolyte precursor while supplying hydrogen sulfide (hereinafter, sometimes simply referred to as "heat treatment") may be performed after removing the solvent from the solution containing the electrolyte precursor to obtain the electrolyte precursor. Also, from the viewpoint of suppressing deterioration of quality due to remaining lithium alkoxide, it is preferable to carry out the heat treatment before heating.

Therefore, it is preferable to carry out the heat treatment after obtaining the electrolyte precursor and before heating, and before or after contacting with the second solvent.

The heat treatment is carried out while supplying hydrogen sulfide.

Hydrogen sulfide may be supplied alone or diluted with an inert gas such as nitrogen gas and argon gas. When the hydrogen sulfide is diluted with an inert gas and then supplied, the content of the hydrogen sulfide is preferably 5% by volume or more, more preferably 10% by volume or more, and even more preferably 20% by volume or more. The upper limit is less than 100% by volume, preferably 90% by volume or less, more preferably 80% by volume or less, and even more preferably 70% by volume or less.

The heating temperature in the heat treatment cannot be generally specified because it can vary depending on the type of the first and second solvents and the desired crystal structure; however, it is preferable to set the temperature lower than the heating temperature in the heating described below, and it is preferably 120°C or higher, 130°C or higher, 150°C or higher, 250°C or higher, 350°C or higher, or 400°C or higher, with the upper limit being preferably selected from the temperature ranges of 700°C or lower, 600°C or lower, 500°C or lower, 450°C or lower, 350°C or lower, 250°C or lower, 200°C or lower, and 160°C or lower. Although a range of 250°C or higher as the lower limit and 200°C or lower as the upper limit is described, it goes without saying that the temperature cannot be in the range of 250°C or higher and 200°C or lower.

The time for the heat treatment is usually 1 minute to 10 hours, preferably 10 minutes to 8 hours, more preferably 30 minutes to 6 hours, and even more preferably 30 minutes to 2 hours.

The heating temperature of the heat treatment can be kept constant, or the temperature can be increased or decreased, or a combination of both.

For example, the solid electrolyte precursor can be placed in a furnace at room temperature (20°C) and the temperature inside the furnace can be raised to a firing temperature described below to perform the heat treatment, or the solid electrolyte precursor can be placed in a furnace set to a predetermined heating temperature and then the heat treatment can be performed.

The supply amount of the hydrogen sulfide is preferably 0.01 $Nm^3$/h or more, more preferably 0.03 $Nm^3$/h or more, even more preferably 0.05 $Nm^3$/h or more, and still more preferably 0.08 $Nm^3$/h or more, and the upper limit is preferably 1.0 $Nm^3$/h or less, more preferably 0.8 $Nm^3$/h or less, even more preferably 0.6 $Nm^3$/h or less, and still more preferably 0.4 $Nm^3$/h or less, relative to 100 g of the raw material-containing substance. When the hydrogen sulfide is diluted with an inert gas and supplied, it is preferable to supply the hydrogen sulfide so that the supply amount is within the above range.

[Heating]

The embodiment (ii) also includes heating. In the embodiment (ii), by heating, the second solvent can be removed, a sulfide solid electrolyte can be formed, and the sulfide solid electrolyte can be crystallized.

Although the heating temperature cannot be generally defined because it can vary depending on the type of the second solvent and the desired crystal structure, as described above, it is preferably selected appropriately from the range of 20°C or higher and 500°C or lower.

In the embodiment (ii), the heating temperature in the heating may be selected according to the type of the second solvent and the desired crystal structure, as described above, and is preferably 150°C or higher, 170°C or higher, 200°C or higher, 250°C or higher, 350°C or higher, or 400°C or higher, with the upper limit being preferably selected from the temperature ranges of 700°C or lower, 600°C or lower, 500°C or lower, 450°C or lower, 350°C or lower, 250°C or lower, 200°C or lower, and 180°C or lower. The heating temperature means a maximum temperature during heating. Moreover, although a range of 250°C or higher as the lower limit and 200°C or lower as the upper limit is described, it goes without saying that the temperature cannot be in the range of 250°C or higher and 200°C or lower.

In addition, when a heat treatment is performed, it is preferable that the temperature is higher than the heating temperature during the heat treatment.

The time for the heating is usually 1 minute to 10 hours, preferably 10 minutes to 8 hours, more preferably 30 minutes to 6 hours, and even more preferably 1 hour to 5 hours. The calcination time means the time for which the heating temperature for calcination is maintained. In the production method of the present embodiment, it is preferable to maintain a constant temperature for the above-mentioned calcination time.

In the embodiment (ii), the heating can be performed continuously with the above-mentioned heat treatment, and heating can be performed while supplying the hydrogen sulfide used in the heat treatment, or heating can be performed with the supply of hydrogen sulfide stopped.

Typical specific examples of heat treatment and heating include, for example,

(a) placing an electrolyte precursor in a furnace at room temperature (20°C), performing a heat treatment by raising the temperature inside the furnace to the heating temperature described above while supplying hydrogen sulfide, and then calcining at a heating temperature in the heating while supplying hydrogen sulfide or stopping the supply of hydrogen sulfide;

(b) placing the electrolyte precursor in a furnace set to a predetermined heating temperature, performing a heat treatment while supplying hydrogen sulfide, and then placing the heat-treated electrolyte precursor in a furnace set to a heating temperature for heating, and heating with or without supplying hydrogen sulfide;

(c) placing the electrolyte precursor in a furnace set to a predetermined heating temperature, performing a heat treatment while supplying hydrogen sulfide, and then calcining while raising the temperature from the heating temperature of the heat treatment to the heating temperature in the heating while supplying hydrogen sulfide or stopping the supply of hydrogen sulfide.

Also, in the embodiment (ii), similarly to the embodiment (i), heating can be performed in multiple stages, such as the first heating and the second heating. In this case, the first heating may be divided into a "first heating-1" and a "first heating-2", and the second heating may be divided into a "second heating-1" and a "second heating-2".

(Sulfide Solid Electrolyte)

In the embodiment (ii) of the production method of the present embodiment, an amorphous sulfide solid electrolyte and a crystalline sulfide solid electrolyte are produced by carrying out the heat treatment or heating described above. Whether an amorphous sulfide solid electrolyte or a crystalline sulfide solid electrolyte is produced can be adjusted by the heating temperature in the heat treatment or heating. That is, it can be adjusted by setting the temperature higher or lower than the temperature for forming a crystalline sulfide solid electrolyte having a desired crystal structure (crystallization temperature).

The amorphous sulfide solid electrolyte and the crystalline sulfide solid electrolyte obtained in the embodiment (ii) are similar to the amorphous sulfide solid electrolyte and the crystalline sulfide solid electrolyte that are explained as being obtained by the production method of the embodiment (i).

(Application)

The sulfide solid electrolyte obtained by the production method of the present embodiment is suitable for use in lithium ion batteries, particularly all-solid-state batteries, because it suppresses the increase of particle diameters and the spread of the particle size distribution, has high ionic conductivity, and has excellent battery performance.

The sulfide solid electrolyte obtained by the production method of the present embodiment may be used for a positive electrode layer, a negative electrode layer, or an electrolyte layer. Each layer can be produced by a known method.

In addition, in the battery, a current collector is preferably used in addition to the positive electrode layer, the electrolyte layer, and the negative electrode layer, and a known current collector can be used. For example, a layer obtained by coating a material that reacts with the solid electrolyte, such as Au, Pt, Al, Ti, and Cu, with Au or the likes can be used.

Examples

Hereinafter, the present invention will be specifically described with reference to Examples, but the present invention is not limited to these Examples.

(Measurement of Average Particle Diameter)

The particle diameter ($D_{50}$) at a cumulative volume percentage of 50% was measured using a laser diffraction type particle size distribution measuring apparatus ("LA-950 (trade name)", manufactured by HORIBA, Ltd.) and taken as the average particle diameter. The arithmetic standard deviation of the average particle diameter was also calculated.

(Measurement of Powder XRD Diffraction)

Powder X-ray diffraction (XRD) measurement was performed as follows.
Each of the powders of the sulfide solid electrolyte obtained in Examples and Comparative Examples was filled in a groove having a diameter of 20 mm and a depth of 0.2 mm, and was leveled with glass to obtain a sample. This sample was sealed with a Kapton film for XRD and measured under the following conditions without being exposed to air.
Measuring device: D2 PHASER, manufactured by Bruker Co., Ltd.

Tube voltage: 30 kV
Tube current: 10 mA
X-ray wavelength: Cu-K$\alpha$ line (1.5418 Å)
Optical system: concentration method
Slit configuration: Using solar slit 4°, divergence slit 1 mm, K$\beta$ filter (Ni plate) used
Detector: semiconductor detector
Measurement range: $2\theta$ = 10 to 60 deg
Step width, scan speed: 0.05 deg, 0.05 deg/sec

(Measurement of Ionic Conductivity)

In the present examples, the ionic conductivity was measured as follows.
Circular pellets having diameters 10 mm (cross-sectional area S: 0.785 cm$^2$) and heights (L) of 0.1 to 0.3 cm were molded from the crystalline sulfide solid electrolytes obtained in Example and Comparative Examples, to obtain samples. Electrode terminals were taken from the top and bottom of the sample, and measured by an alternating current impedance method at 25°C (frequency range: 5 MHz to 0.5 Hz, amplitude: 10 mV), and a Cole-Cole plot was obtained. The real part Z' ($\Omega$) at the point where -Z" ($\Omega$) becomes minimum in the vicinity of the right end of an arc observed in a region on the high frequency side was defined as the bulk resistance R ($\Omega$) of the electrolyte, and the ionic conductivity $\sigma$ (S/cm) was calculated according to the following equations.

$$R = \rho(L/S)$$

$$\sigma = 1/\rho$$

(Example 1)

In a glove box under an argon atmosphere, 0.2546 g of lithium sulfide, 0.3241 g of diphosphorus pentasulfide, and 0.3554 g of elemental sulfur were mixed using a mortar and introduced into a 100-milliliter reaction vessel together with a stirrer (reaction vessel 1). Similarly, 0.1236 g of lithium chloride and 0.1520 g of lithium bromide were mixed in a mortar and introduced together with a stirrer into another 100-milliliter reaction vessel (reaction vessel 2). In a nitrogen atmosphere, 14.94 mL of a first solvent, which is a mixed solvent of ethanol (EtOH), tetrahydrofuran (THF) and acetonitrile (ACN) (the total amount of tetrahydrofuran (THF) and acetonitrile (ACN) relative to 1.0 part by volume of ethanol (EtOH) was 237.1 parts by volume, with ethanol : tetrahydrofuran : acetonitrile = 0.0084 : 1 : 1 (volume ratio)), was added to the reaction vessel 1, and the mixture was stirred for 10 minutes with a magnetic stirrer. Next, the solution from the reaction vessel 1 was added to the reaction vessel 2, and further mixing was performed by stirring with a magnetic stirrer for 10 minutes.
Then, using a vacuum pump and an oil bath, drying was performed under reduced pressure at room temperature (20°C) for 1 hour, and drying under reduced pressure at 130°C for 1 hour to remove the solvent from the solution containing an electrolyte precursor to obtain the electrolyte precursor.

To the obtained electrolyte precursor, 30 mL of toluene (second solvent) was added at room temperature (20°C), and the mixture was stirred for 1 hour using a magnetic stirrer (rotation speed: 600 rpm), and was brought into contact with the second solvent using a glass filter (particle retention capacity: 1.6 $\mu$m) under a nitrogen atmosphere to obtain a powder of the electrolyte precursor.

Using a vacuum pump and oil bath, the obtained electrolyte precursor powder was heated under reduced pressure at room temperature (20°C) for 1 hour (first heating-1) and under reduced pressure at 130°C for 1 hour (first heating-2). Furthermore, the powder obtained by the first heating was heated in a nitrogen atmosphere at 250°C for 1 hour (second heating-1), and further heated in a nitrogen atmosphere at 430°C for 8 hours (second heating-2) to obtain a powder.

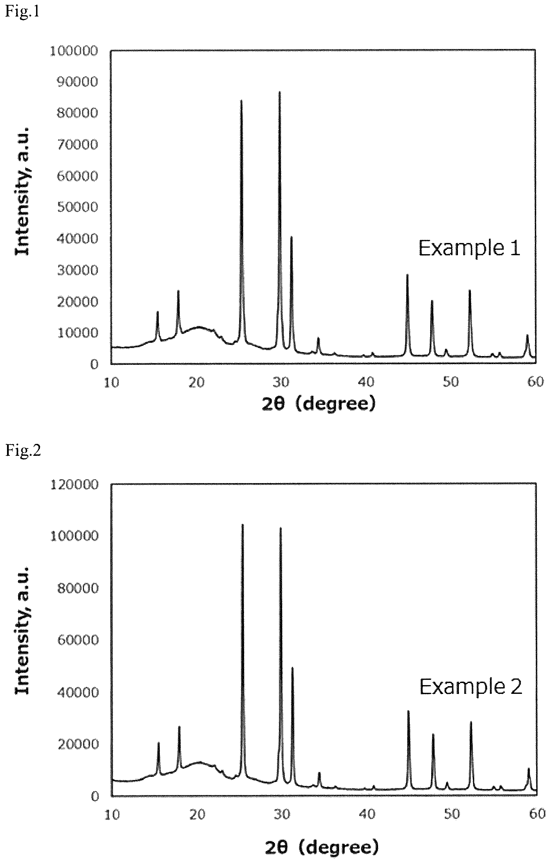

The powder obtained after the second heating was subjected to powder XRD diffraction measurement. The X-ray diffraction spectra are shown in Fig. 1.

The average particle diameter was measured for the powder before contact with the second solvent (hereinafter referred to as "Powder 1") and the powder obtained after the second heating (hereinafter referred to as "Powder 2") to obtain the average particle diameter ($D_{50}$) and arithmetic standard deviation. In addition, the ionic conductivity of the powder obtained by heating at 430°C in Example 1 was measured and found to be 5.5 mS/cm.

(Examples 2 to 5)

Powders of Examples 2 to 5 were obtained in the same manner as in Example 1, except that in Example 1, the drying conditions in obtaining the electrolyte precursor, the temperature conditions in contacting the electrolyte precursor with the second solvent, and conditions such as the presence or absence of stirring, were set to the conditions shown in Table 1.

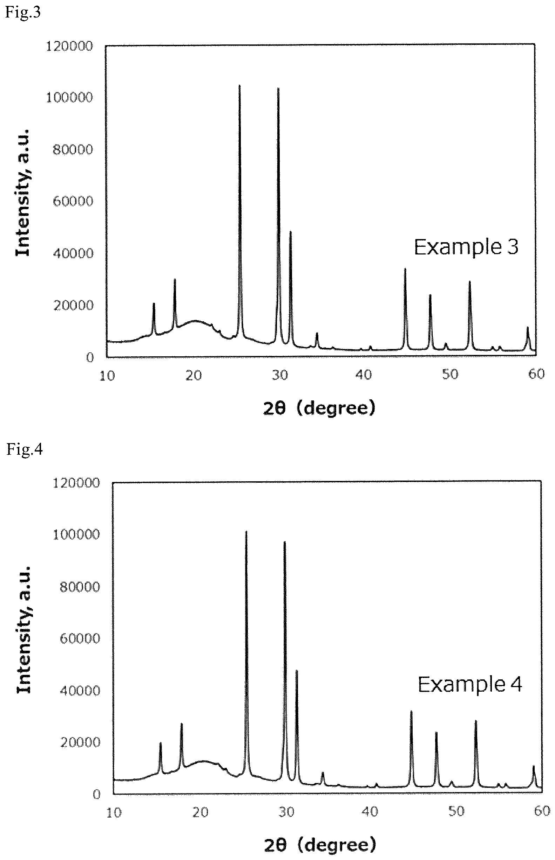

The powder obtained after the second heating was subjected to powder XRD diffraction measurement. The X-ray diffraction spectra are shown in Figs. 2 to 5.

The average particle diameter of Powder 1 and Powder 2 was measured, and the average particle diameter ($D_{50}$) and arithmetic standard deviation were obtained. In addition, the ionic conductivity was measured for the powders obtained by heating at 430°C in Examples 2 to 5. The above results are shown in Table 1.

(Comparative Example 1)

A powder was obtained in the same manner as in Example 1, except that in Example 1, the electrolyte precursor was not brought into contact with the second solvent and the first heating was not performed. Here, "Powder 1" was a powder after drying to obtain the electrolyte precursor.

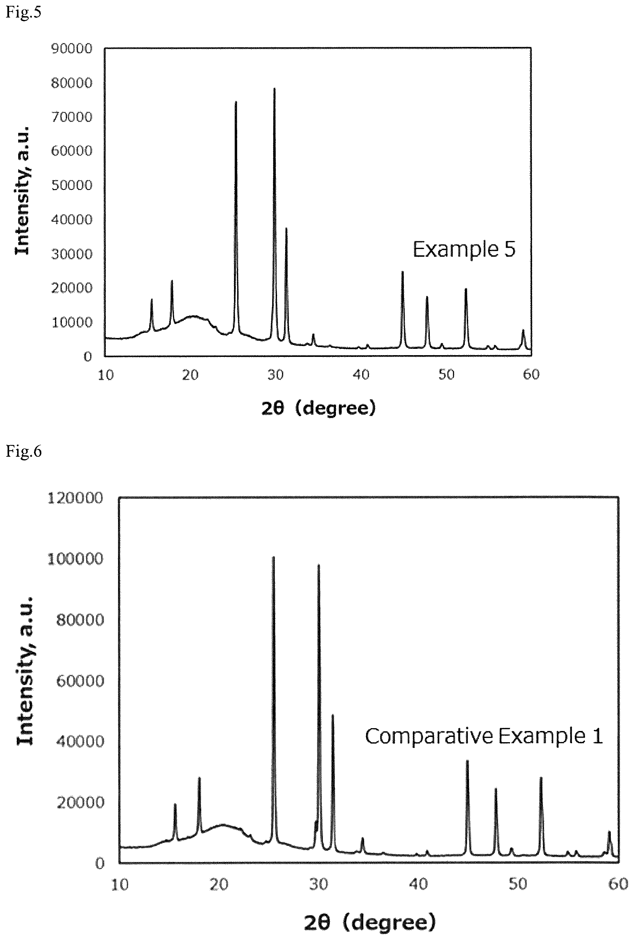

The powder obtained after the second heating was subjected to powder XRD diffraction measurement. The X-ray diffraction spectrum is shown in Fig. 6.

The average particle diameter of Powder 1 and Powder 2 was measured, and the average particle diameter ($D_{50}$) and arithmetic standard deviation were obtained. In addition, the ionic conductivity was measured for the powder obtained by heating at 430°C in Comparative Example 1. The above results are shown in Table 1.

Table 1

| | | Examples | | | | | Comparative Example |
|---|---|---|---|---|---|---|---|
| | | 1 | 2 | 3 | 4 | 5 | 1 |
| Embodiment | - | (i) | (i) | (i) | (i) | (i) | (i) |
| Drying condition | °C | 20/130 | 20/80 | 20 | 20 | 20/130 | 20/130 |
| | | Vacuum drying | Vacuum drying | Vacuum drying | Vacuum drying | Vacuum drying | Vacuum drying |
| Contact condition | °C | 20 | 20 | 20 | 100 | 20 | - |
| Stirring | - | Yes | Yes | Yes | Yes | No | - |
| First heating condition | °C | 20/130 | 20/130 | 20/130 | 20/130 | 20/130 | - |

(continued)

| | | Examples | | | | | Comparative Example |
|---|---|---|---|---|---|---|---|
| | | 1 | 2 | 3 | 4 | 5 | 1 |
| Second heating condition | °C | 250/430 | 250/430 | 250/430 | 250/430 | 250/430 | 250/430 |
| Powder 1 | | | | | | | |
| Average particle diameter $D_{50}$-1 | μm | 20.8 | 10.8 | 10.3 | 8.2 | 65.1 | 52.7 |
| Arithmetic standard deviation σ-1 | μm | 18.9 | 26.6 | 30.1 | 9.9 | 45.3 | 31.7 |
| Powder 2 | | | | | | | |
| Average particle diameter $D_{50}$-2 | μm | 32.3 | 11.0 | 11.0 | 8.8 | 64.8 | 86.1 |
| Arithmetic standard deviation σ-2 | μm | 21.0 | 13.6 | 61.2 | 7.5 | 34.4 | 39.8 |
| Average particle diameter ratio ($D_{50}$-2/$D_{50}$-1) | - | 1.55 | 1.02 | 1.07 | 1.07 | 1.00 | 1.63 |
| Standard deviation ratio (σ-2/σ-1) | - | 1.11 | 0.51 | 2.03 | 0.76 | 0.76 | 1.26 |
| Ionic conductivity | mS/cm | 5.5 | 5.8 | 7.1 | 6.8 | 8.1 | 7.4 |

In Tables 1 to 3, the average particle diameter ratio indicates the ratio of the average particle diameter of the powder before and after heating, and is an index for grasping whether granulation due to heating occurs or not. The closer to 1.0, the smaller the degree of granulation due to heating.

Furthermore, the standard deviation ratio indicates the ratio of the standard deviation of the average particle diameter of the powder before and after heating, and is an index for grasping the width of the particle size distribution due to heating. The closer to 1.0, the smaller the change in particle size distribution due to heating.

As shown in Table 1, the average particle diameter ratios of Examples 1 to 5 are superior to the average particle diameter ratio of Comparative Example 1, and it was confirmed that the effect of suppressing the increase of particle diameters was excellent. In addition, the standard deviation ratio is generally excellent, and it was confirmed that in the sulfide solid electrolyte obtained by the production method of the present embodiment, the increase of particle diameters and the spread of the particle size distribution are suppressed.

According to Examples 1, 2, and 5, it was confirmed that heating and drying in the same manner as the first heating before contacting with the second solvent is effective in terms of suppressing the increase of particle diameters and the spread of the particle size distribution. Example 3 is an example in which the drying conditions in Example 1 were changed to room temperature (20°C), and it was confirmed that the particle diameter could be reduced and the increase of particle diameters could be suppressed. Moreover, according to Example 4, it was confirmed that by contacting with the second solvent under higher temperature conditions, the particle diameter can be reduced, the particle size distribution can be reduced, and the change in the particle size distribution can be reduced while suppressing the increase of particle diameters.

Comparing Examples 1 to 4 with Comparative Example 1, it can be seen that the average particle diameter can be reduced by contacting the electrolyte precursor with the second solvent while stirring. On the other hand, comparing Example 5, in which the electrolyte precursor was brought into contact with the second solvent without stirring, with Comparative Example 1, it can be seen that the average particle diameter was larger when the electrolyte precursor was brought into contact with the second solvent without stirring. It is believed that the agglomeration of the electrolyte precursor is suppressed or reduced by contacting with the electrolyte precursor with the second solvent while stirring, and as a result, the average particle diameter of the sulfide solid electrolyte obtained by heating is also reduced.

The above shows that the average particle diameter can be adjusted by the presence or absence of stirring and the degree of stirring.

It was also confirmed that the ionic conductivity of the sulfide solid electrolytes of the Examples was high, ranging from 5.5 to 8.1 mS/cm. This is believed to be because, as to be described later, the sulfide solid electrolytes of the Examples have an argyrodite type crystal structure that exhibits high ionic conductivity.

As shown in Figs. 1 to 5, the powders obtained by heating at 430°C in Examples 1 to 5 had peaks at $2\theta$ = 15.5°, 18.0°, 25.0°, 30.0°, 31.4°, 45.3°, 47.0°, and 52.0°, and were therefore confirmed to be crystalline sulfide solid electrolytes having an argyrodite type crystal structure.

(Example 6)

In a glove box under an argon atmosphere, 60.19 g of lithium sulfide, 76.63 g of diphosphorus pentasulfide, and 84.02 g of elemental sulfur were mixed using a mixer, and half of each was introduced into 5-liter reaction vessels (reaction vessels 1-1 and 1-2) together with a stirrer. Similarly, 14.61 g of lithium chloride and 17.96 g of lithium bromide were introduced together with a stirrer into another 5-liter reaction vessel (reaction vessel 2). In a nitrogen atmosphere, 3546 mL of a mixed solvent of ethanol (EtOH), tetrahydrofuran (THF) and acetonitrile (ACN) (the total amount of tetrahydrofuran (THF) and acetonitrile (ACN) relative to 1.0 part by volume of ethanol (EtOH) was 239.0 parts by volume, with ethanol : tetrahydrofuran : acetonitrile = 0.0084 : 1 : 1 (volume ratio)) was added in half to each of the reaction vessels 1-1 and 1-2, and the mixture was stirred for 10 minutes with a magnetic stirrer. Next, the solution from the reaction vessels 1-1 and 1-2 was added to the reaction vessel 2, and further mixing was performed by stirring with a magnetic stirrer for one hour.

The solution containing the obtained electrolyte precursor was then spray-dried using a spray dryer ("CNL-3 (model number)", manufactured by Ohkawara Kakohki Co., Ltd.) at a spray pressure of 0.30 MPa and an inlet temperature of 150°C to obtain an electrolyte precursor. The obtained electrolyte precursor was subjected to the same operations as in Example 1, from contact with the second solvent to the second heating, to obtain a powder of Example 6.

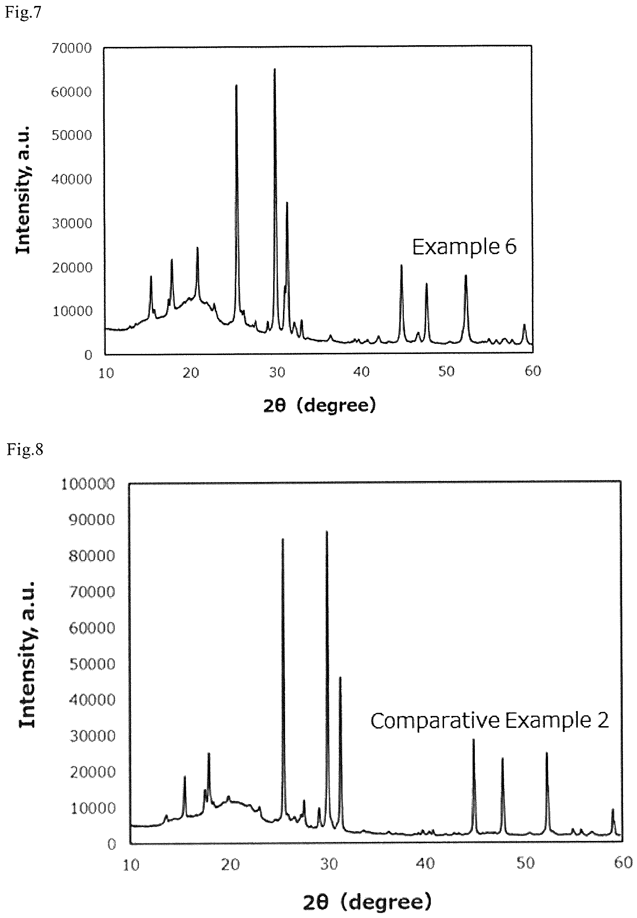

The powder obtained after the second heating was subjected to powder XRD diffraction measurement. The X-ray diffraction spectra are shown in Fig. 7.

The average particle diameter of Powder 1 and Powder 2 was measured, and the average particle diameter ($D_{50}$) and arithmetic standard deviation were obtained. In addition, the ionic conductivity was measured for the powder obtained by heating at 430°C in Example 6. The above results are shown in Table 2.

(Comparative Example 2)

A powder was obtained in the same manner as in Example 6, except that in Example 6, the electrolyte precursor was not brought into contact with the second solvent and the first heating was not performed. Here, "Powder 1" was a powder after drying to obtain the electrolyte precursor.

The powder obtained after the second heating was subjected to powder XRD diffraction measurement. The X-ray diffraction spectra are shown in Fig. 8.

The average particle diameter of Powder 1 and Powder 2 was measured, and the average particle diameter ($D_{50}$) and arithmetic standard deviation were obtained. In addition, the ionic conductivity was measured for the powder obtained by heating at 430°C in Comparative Example 2. The above results are shown in Table 2.

Table 2

|  |  | Examples | Comparative Example |
|---|---|---|---|
|  |  | 6 | 2 |
| Embodiment | - | (i) | (i) |
| Drying condition | °C | 150 | 150 |
|  |  | Spray | Spray |
| Contact condition | °C | 20 | - |
| Stirring | - | Yes | - |
| First heating condition | °C | 20/130 | - |
| Second heating condition | °C | 250/430 | 250/430 |
| Powder 1 |  |  |  |
| Average particle diameter $D_{50}$-1 | $\mu$m | 3.6 | 4.8 |
| Arithmetic standard deviation $\sigma$-1 | $\mu$m | 1.9 | 4.4 |

(continued)

| Powder 2 | | | |
|---|---|---|---|
| Average particle diameter $D_{50}$-2 | $\mu$m | 6.1 | 10.6 |
| Arithmetic standard deviation $\sigma$-2 | $\mu$m | 4.4 | 17.8 |
| Average particle diameter ratio ($D_{50}$-2/$D_{50}$-1) | - | 1.69 | 2.21 |
| Standard deviation ratio ($\sigma$-2/$\sigma$-1) | - | 2.32 | 4.05 |
| Ionic conductivity | mS/cm | 2.1 | 1.6 |

As shown in Table 2, the average particle diameter ratio and standard deviation ratio of Example 6 are superior to the average particle diameter ratio and standard deviation ratio of Comparative Example 2, confirming that in the sulfide solid electrolyte obtained by the production method of the present embodiment, the increase of particle diameter and the spread of particle size distribution are suppressed.

It was also confirmed that the sulfide solid electrolyte of Example 6 had a high ionic conductivity of 2.1 mS/cm. This is believed to be because, as to be described later, the sulfide solid electrolytes of the Examples have an argyrodite type crystal structure that exhibits high ionic conductivity.

From the results of Examples 1 to 5 and Example 6, it was also confirmed that the average particle diameter and arithmetic standard deviation change depending on the drying method when removing the solvent from the solution containing the electrolyte precursor to obtain the electrolyte precursor. For example, Example 1 employing vacuum drying is compared with Example 6 employing spray drying, which have the same conditions except for the drying method. Since the average particle diameter and arithmetic standard deviation of Example 6, which employs spray drying, are smaller than those of Example 1, it can be seen that the average particle diameter and arithmetic standard deviation can be reduced by employing spray drying. In other words, it can be seen that, compared to the other Examples, the average particle diameter can be reduced and the arithmetic standard deviation can be reduced (the particle size distribution can be reduced).

In addition, as shown in Fig. 7, the powder obtained by heating at 430°C in Example 6 had peaks at $2\theta$ = 15.5°, 18.0°, 25.0°, 30.0°, 31.4°, 45.3°, 47.0°, and 52.0°, and were therefore confirmed to be crystalline sulfide solid electrolytes having an argyrodite type crystal structure.

(Example 7)

In a reaction vessel (volume: 100 mL), 0.5960 g of lithium sulfide, 0.7588 g of diphosphorus pentasulfide, 0.2894 g of lithium chloride, and 0.3558 g of lithium bromide were introduced as raw material-containing substances under a nitrogen atmosphere. A stirrer was introduced, and 10 mL of tetrahydrofuran was added while stirring with a stirrer, and mixing was performed for 24 hours at room temperature (20°C) (rotation speed: 300 rpm) to obtain a mixture containing the above-mentioned raw material-containing substances, reaction products (including $Li_3PS_4$), and tetrahydrofuran (the solvent 1-1). Subsequently, 30 mL of ethanol (the solvent 1-2) was added, and mixing was continued for another hour at room temperature (20°C) to prepare a solution containing an electrolyte precursor. The obtained solution was dried at room temperature and under vacuum for one hour, and then dried at 130°C for one hour to remove the solvent from the solution containing the electrolyte precursor, and the electrolyte precursor was obtained.

To 1.2 g of the obtained electrolyte precursor, 30 mL of toluene (second solvent) was added at room temperature (20°C), and the mixture was stirred for 1 hour using a magnetic stirrer (rotation speed: 600 rpm), and was brought into contact with the second solvent using a glass filter (particle retention capacity: 1.6 $\mu$m) under a nitrogen atmosphere to obtain a powder of the electrolyte precursor.

Using a vacuum pump and oil bath, the obtained electrolyte precursor powder was heated under reduced pressure at room temperature (20°C) for 1 hour and under reduced pressure at 130°C for 1 hour. Next, the powder obtained was heated in a nitrogen atmosphere at 250°C for 1 hour, and further heated in a nitrogen atmosphere at 430°C for 8 hours to obtain a powder.

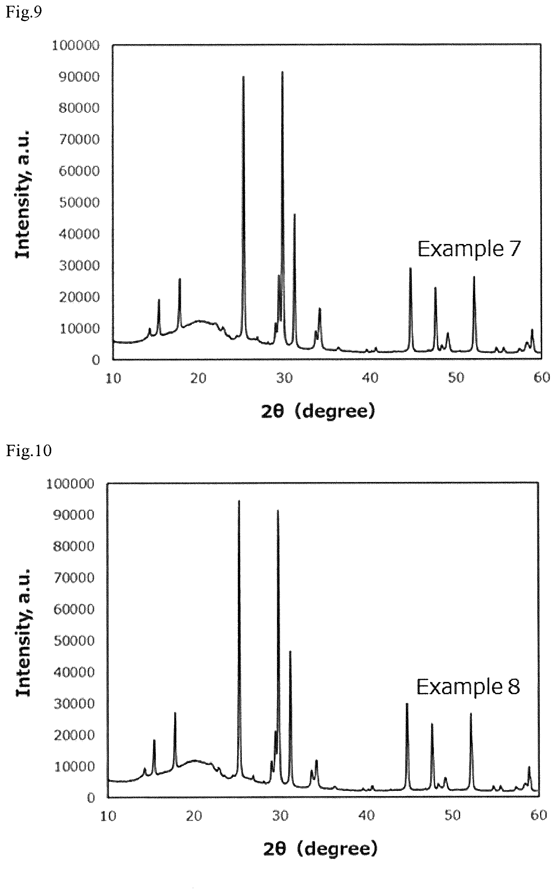

The powder obtained after heating at 430°C was subjected to powder XRD diffraction measurement. The X-ray diffraction spectra are shown in Fig. 9.

The average particle diameter was measured for the powder before contact with the second solvent (hereinafter referred to as "Powder 1") and the powder obtained after heating at 430°C (hereinafter referred to as "Powder 2") to obtain the average particle diameter ($D_{50}$) and arithmetic standard deviation. In addition, the ionic conductivity was measured for the powder obtained by heating at 430°C in Example 7. The above results are shown in Table 3.

(Example 8)

A powder was obtained in the same manner as in Example 7 except that in Example 7, the amounts of the raw material-containing substance and the solvent used in obtaining the solid electrolyte precursor were set to 0.6 times, and the drying conditions were set to the conditions shown in Table 2.

The powder obtained after heating at 430°C was subjected to powder XRD diffraction measurement. The X-ray diffraction spectra are shown in Fig. 10.

The average particle diameter of Powder 1 and Powder 2 was measured, and the average particle diameter ($D_{50}$) and arithmetic standard deviation were obtained. In addition, the ionic conductivity was measured for the powder obtained by heating at 430°C. The above results are shown in Table 3.

(Comparative Example 3)

A powder was obtained in the same manner as in Example 7, except that in Example 7, the drying for obtaining the electrolyte precursor was not performed and the electrolyte precursor was not brought into contact with the second solvent. Here, "Powder 1" refers to the powder before being heated at room temperature (20°C) under reduced pressure for 1 hour.

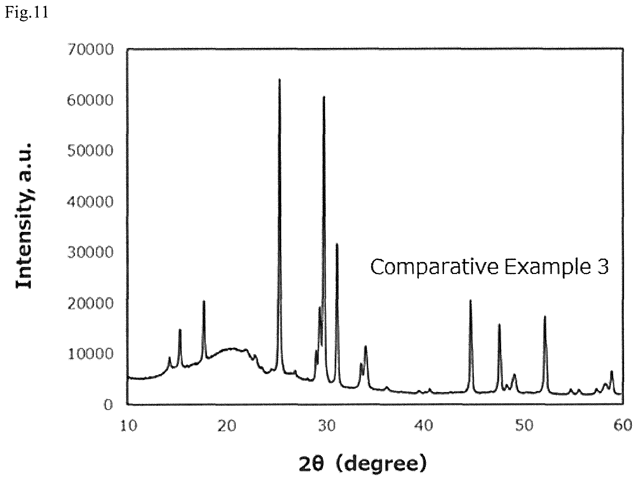

The powder obtained after heating at 430°C was subjected to powder XRD diffraction measurement. The X-ray diffraction spectra are shown in Fig. 11.

The average particle diameter of Powder 1 and Powder 2 was measured, and the average particle diameter ($D_{50}$) and arithmetic standard deviation were obtained. In addition, the ionic conductivity was measured for the powder obtained by heating at 430°C. The above results are shown in Table 3.

Table 3

| | | Examples | | Comparative Example |
|---|---|---|---|---|
| | | 7 | 8 | 3 |
| Embodiment | - | (ii) | (ii) | (ii) |
| Drying condition | °C | 20/130 | 20/80 | - |
| | | Vacuum drying | Vacuum drying | - |
| Contact condition | °C | 20 | 20 | - |
| Stirring | - | Yes | Yes | - |
| First heating condition | °C | 20/130 | 20/130 | - |
| Second heating condition | °C | 250/430 | 250/430 | 250/430 |
| Powder 1 | | | | |
| Average particle diameter $D_{50}$-1 | μm | 14.9 | 9.0 | 85.9 |
| Arithmetic standard deviation σ-1 | μm | 20.5 | 12.0 | 60.5 |
| Powder 2 | | | | |
| Average particle diameter $D_{50}$-2 | μm | 10.9 | 8.9 | 207.6 |
| Arithmetic standard deviation σ-2 | μm | 30.1 | 16 | 160.8 |
| Average particle diameter ratio ($D_{50}$-2/$D_{50}$-1) | - | 0.73 | 0.99 | 2.42 |
| Standard deviation ratio (σ-2/σ-1) | - | 1.47 | 1.33 | 2.66 |
| Ionic conductivity | mS/cm | 1.7 | 3.9 | 2.3 |

As shown in Table 3, the average particle diameter ratios and standard deviation ratios of Examples 7 and 8 are superior to the average particle diameter ratio and standard deviation ratio of Comparative Example 3, confirming that in the sulfide solid electrolyte obtained by the production method of the present embodiment, the increase of particle diameter and the spread of particle size distribution are suppressed. Furthermore, since the average particle diameters and standard deviations of Examples 7 and 8 are smaller than those of Comparative Example 3, it was confirmed that the present invention is effective not only in suppressing an increase of particle diameters and a spread of particle size distribution, but also in reducing the particle diameter and particle size distribution.

It was also confirmed that the ionic conductivities were both high, which were 1.7 and 3.9 mS/cm.

As shown in Figs. 9 and 10, the powders obtained by heating at 250°C and 430°C in Examples 7 and 8 had peaks at $2\theta$ = 15.5°, 18.0°, 25.0°, 30.0°, 31.4°, 45.3°, 47.0°, and 52.0°, and were therefore confirmed to be crystalline sulfide solid electrolytes having an argyrodite type crystal structure.

Industrial Applicability

According to the method for producing a sulfide solid electrolyte of the present embodiment, it is possible to efficiently provide a sulfide solid electrolyte which has high ionic conductivity and in which an increase of particle diameters and a spread of particle size distribution are suppressed. The sulfide solid electrolyte obtained by the production method of the present embodiment is suitably used for lithium ion batteries, in particular, lithium ion batteries used for information-related devices such as personal computers, video cameras, and mobile phones, and communication devices, and particularly all-solid-state batteries.

**Claims**

1.    A method for producing a sulfide solid electrolyte, comprising

 mixing, in a first solvent, a raw material-containing substance that contains a plurality of raw materials each containing at least one atom selected from a lithium atom, a phosphorus atom, a sulfur atom, and a halogen atom to obtain a solution containing an electrolyte precursor,
 removing the solvent from the solution to obtain the electrolyte precursor,
 bringing the electrolyte precursor into contact with a second solvent, and
 subsequently heating the mixture, wherein
 the second solvent differs from the first solvent and is a hydrocarbon solvent.

2.    The method for producing a sulfide solid electrolyte according to claim 1, wherein the hydrocarbon solvent is at least one organic solvent selected from an aliphatic hydrocarbon solvent, an alicyclic hydrocarbon solvent, and an aromatic hydrocarbon solvent.

3.    The method for producing a sulfide solid electrolyte according to claim 1 or 2, wherein lithium halide has a solubility of 0.5% by mass or less in the hydrocarbon solvent at 25°C.

4.    The method for producing a sulfide solid electrolyte according to any one of claims 1 to 3, wherein the hydrocarbon solvent is an aromatic hydrocarbon solvent.

5.    The method for producing a sulfide solid electrolyte according to claim 4, wherein the aromatic hydrocarbon solvent is an alkylbenzene.

6.    The method for producing a sulfide solid electrolyte according to claim 5, wherein the alkylbenzene has an alkyl group having 1 to 4 carbon atoms.

7.    The method for producing a sulfide solid electrolyte according to any one of claims 1 to 6, wherein the second solvent is used in the contact in an amount of 50 parts by mass or more and 10,000 parts by mass or less based on 100 parts by mass of the electrolyte precursor.

8.    The method for producing a sulfide solid electrolyte according to any one of claims 1 to 7, wherein the contact is performed at least once.

9.    The method for producing a sulfide solid electrolyte according to any one of claims 1 to 8, wherein the raw material-containing substance contains elemental sulfur.

10.    The method for producing a sulfide solid electrolyte according to claim 9, wherein the first solvent is an organic solvent containing at least one atom selected from an oxygen atom and a nitrogen atom.

11.    The method for producing a sulfide solid electrolyte according to claim 10, wherein the organic solvent includes at least one organic solvent selected from an alcohol solvent, an ether solvent, and a nitrile solvent.

12. The method for producing a sulfide solid electrolyte according to any one of claims 9 to 11, wherein a heating temperature in the heating is 20°C or higher and 500°C or lower.

13. The method for producing a sulfide solid electrolyte according to any one of claims 9 to 12, wherein the elemental sulfur is used in an amount of 0.5 moles or more based on 1.0 mole of the lithium sulfide.

14. The method for producing a sulfide solid electrolyte according to any one of claims 1 to 8, wherein the raw material-containing substance contains lithium sulfide, phosphorus sulfide, and at least one halogen atom-containing raw material selected from lithium halide and elemental halogen.

15. The method for producing a sulfide solid electrolyte according to any one of claims 1 to 8 and 14, wherein the raw material-containing substance does not contain elemental sulfur.

16. The method for producing a sulfide solid electrolyte according to claim 14 or 15, including, prior to heating, heat treating the electrolyte precursor while supplying hydrogen sulfide.

17. The method for producing a sulfide solid electrolyte according to any one of claims 14 to 16, wherein the first solvent contains an alcohol solvent and an ether solvent.

18. The method for producing a sulfide solid electrolyte according to any one of claim 17, wherein in the obtaining of a solution containing the electrolyte precursor, the raw material-containing substance is mixed in an ether solvent, and then an alcohol solvent is added and mixed.

19. The method for producing a sulfide solid electrolyte according to any one of claims 14 to 18, wherein the heating temperature in the heating is 150°C or higher.

20. The method for producing a sulfide solid electrolyte according to any one of claims 1 to 19, wherein the halogen atom is at least one atom selected from a chlorine atom, a bromine atom, and an iodine atom.

21. The method for producing a sulfide solid electrolyte according to any one of claims 1 to 20, wherein a crystalline sulfide solid electrolyte having an argyrodite type crystal structure or a thio-LISICON Region II type crystal structure is produced.

Fig.1

Fig.2

Fig.3

Fig.4

Fig.5

Fig.6

Fig.7

2θ (degree)

Fig.8

2θ (degree)

Fig.9

Fig.10

Fig.11

## INTERNATIONAL SEARCH REPORT

| International application No. |
|---|
| **PCT/JP2023/025218** |

### A. CLASSIFICATION OF SUBJECT MATTER

**H01B 13/00**(2006.01)i; **C01B 25/14**(2006.01)i; **H01M 10/0562**(2010.01)i
FI: H01B13/00 Z; C01B25/14; H01M10/0562

According to International Patent Classification (IPC) or to both national classification and IPC

### B. FIELDS SEARCHED

Minimum documentation searched (classification system followed by classification symbols)

H01B13/00; C01B25/14; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2014-179265 A (TOYOTA MOTOR CORP.) 25 September 2014 (2014-09-25) paragraphs [0021]-[0095], fig. 1-9 | 1-8, 14-16, 19-20 |
| Y | | 21 |
| A | | 9-13, 17-18 |
| Y | WO 2019/098245 A1 (IDEMITSU KOSAN CO., LTD.) 23 May 2019 (2019-05-23) claim 14, paragraph [0026] | 21 |
| Y | WO 2017/159667 A1 (IDEMITSU KOSAN CO., LTD.) 21 September 2017 (2017-09-21) paragraphs [0084]-[0086] | 21 |
| A | JP 2018-163736 A (SEIKO EPSON CORP.) 18 October 2018 (2018-10-18) paragraphs [0008]-[0100], fig. 1-18 | 1-21 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 August 2023** | **05 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/025218**

| Patent document cited in search report | | | Publication date (day/month/year) | Patent family member(s) | Publication date (day/month/year) |
|---|---|---|---|---|---|
| JP | 2014-179265 | A | 25 September 2014 | US 2014/0272554 A1 paragraphs [0032]-[0106], fig. 1-9 | |
| WO | 2019/098245 | A1 | 23 May 2019 | US 2020/0358132 A1 claim 14, paragraphs [0035]-[0036] CN 111344812 A | |
| WO | 2017/159667 | A1 | 21 September 2017 | US 2019/0074542 A1 paragraphs [0133]-[0136] EP 3432320 A1 CN 108780683 A KR 10-2018-0122348 A | |
| JP | 2018-163736 | A | 18 October 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014191899 A
- WO 2014192309 A
- WO 2018054709 A
- WO 2020105737 A
- WO 2021230189 A

- JP 2014220051 A
- JP 2015232965 A
- JP 2019169459 A
- JP 2013016423 A

### Non-patent literature cited in the description

- *J. Mater. Chem. A*, 2019, vol. 7, 558-566
- All-solid Battery/Sulfide Electrolyte. *The 62nd Battery Symposium in Japan proceedings*, 29 November 2021, 3E01

- *Adv. Energy Sustenability Res.*, 2022, 2200019
- **KANNO et al.** *Journal of The Electrochemical Society*, 2001, vol. 148 (7), A742-746
- *Solid State Ionics*, 2006, vol. 177, 2721-2725